(19) **Europäisches Patentamt European Patent Office Office européen des brevets**

(11) **EP 4 564 721 A1**

(12) **EUROPEAN PATENT APPLICATION**
published in accordance with Art. 153(4) EPC

(43) Date of publication:
04.06.2025 Bulletin 2025/23

(21) Application number: 23845482.1

(22) Date of filing: 24.07.2023

(51) International Patent Classification (IPC):
*H04L 5/00* (2006.01)

(52) Cooperative Patent Classification (CPC):
H04L 5/00; H04W 72/044; H04W 72/21;
H04W 72/23; H04W 72/231; H04W 72/232

(86) International application number:
PCT/CN2023/108808

(87) International publication number:
WO 2024/022272 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.07.2022 CN 202210879050

(71) Applicant: Vivo Mobile Communication Co., Ltd.
Dongguan, Guangdong 523863 (CN)

(72) Inventors:
• YANG, Kun
  Dongguan, Guangdong 523863 (CN)
• WANG, Huan
  Dongguan, Guangdong 523863 (CN)

(74) Representative: Conti, Marco
Bugnion S.p.A.
Via di Corticella, 87
40128 Bologna (IT)

(54) **METHOD AND APPARATUS FOR DETERMINING TRANSMISSION CONFIGURATION OF BACKHAUL LINK, AND RELAY DEVICE AND NETWORK-SIDE DEVICE**

(57) This application pertains to the communication field, and discloses a method and an apparatus for determining a transmission configuration of a backhaul link, a relay device, and a network-side device. The method for determining a transmission configuration of a backhaul link in embodiments of this application includes: obtaining, by a relay device, a configurable candidate beam set of a control link; and determining, by the relay device, a transmission configuration indicator TCI configuration for a downlink signal and/or a sending configuration for an uplink signal of the backhaul link based on the candidate beam set.

EP 4 564 721 A1

```
┌────────────────────────────────────────────────────────────────┐
│  A relay device obtains a configurable candidate beam set of a   │ ╮ 301
│                        control link                               │ ╯
└────────────────────────────────────────────────────────────────┘
                              │
                              ▼
┌────────────────────────────────────────────────────────────────┐
│ The relay device determines a transmission configuration indicator│ ╮ 302
│   TCI configuration for a downlink signal and/or a sending        │ ╯
│  configuration for an uplink signal of a backhaul link based on the│
│                       candidate beam set                          │
└────────────────────────────────────────────────────────────────┘
```

FIG. 3

## Description

### CROSS-REFERENCE TO RELATED APPLICATIONS

This application claims priority to Chinese Patent Application No. 202210879050.6, filed with the China National Intellectual Property Administration on July 25, 2022 and entitled "METHOD AND APPARATUS FOR DETERMINING TRANSMISSION CONFIGURATION OF BACKHAUL LINK, RELAY DEVICE, AND NETWORK-SIDE DEVICE", which is incorporated herein by reference in its entirety.

### TECHNICAL FIELD

This application pertains to the field of communication technologies, and specifically relates to a method and an apparatus for determining a transmission configuration of a backhaul link, a relay device, and a network-side device.

### BACKGROUND

Signal amplifiers are widely used to expand coverage of cells. For example, as a relay node, a network controlled repeater (Network controlled repeater, NCR) may forward signals from a base station or user equipment (User Equipment, UE) (which may also be referred to as a terminal device) and amplify the signals to achieve an objective of expanding coverage.

The NCR has a beamforming capability and can receive control from an upstream base station (that is, a donor (donor) base station). In other words, the base station can control transmission parameters of the NCR. For example, the base station can control receive/transmit beams and the like between the NCR and the base station or between the NCR and the UE.

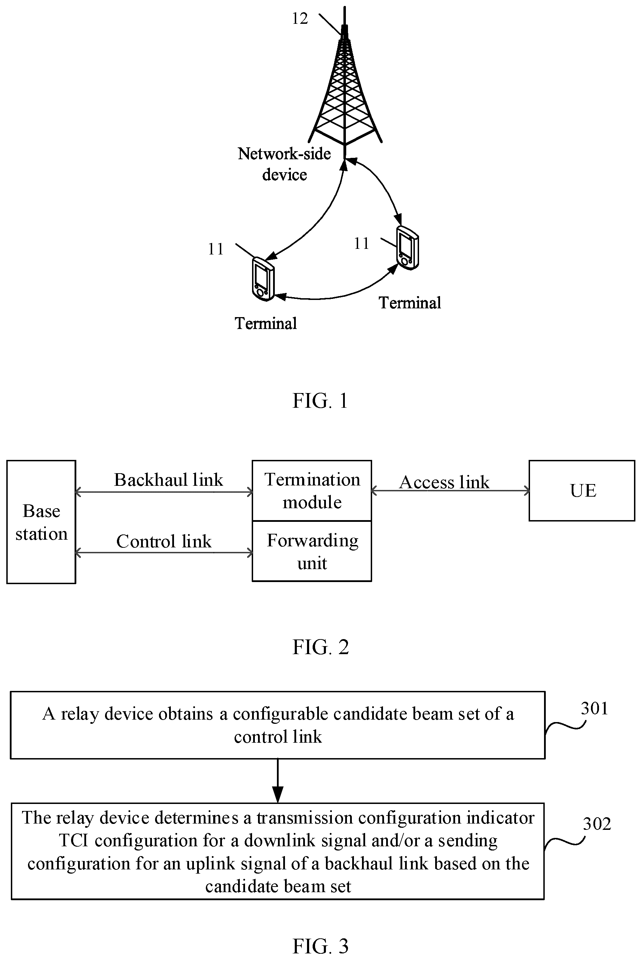

For example, a network structure shown in FIG. 2 includes three network nodes, and an intermediate network node is an NCR device, which includes a termination module (mobile termination, MT) and a forwarding unit (forwarding unit/Fwd). The MT may establish a connection (that is, a control link (control link)) to the upstream base station, and the base station may transmit control signaling to the NCR through the MT to control transmission/reception related parameters (including power, an amplification factor, a beam, on/off, and other parameters) of a backhaul link (backhaul link, BH) between the NCR and the base station or an access link (access link, AL) between the NCR and the UE.

For the link between the NCR and the base station, it is necessary to determine a receive beam for a downlink signal and a transmit beam for an uplink signal of the NCR. For control link downlink signals (including a PDCCH, a PDSCH, an SSB, and the like) sent by the base station to the NCR, the NCR may determine receive beams for the corresponding control link downlink signals according to rules for receiving downlink signals by the terminal. However, for a downlink signal sent by the base station to the NCR and amplified and forwarded by the NCR in the backhaul link, no corresponding method is available for determining a corresponding receive beam. Similarly, for an uplink signal sent by the terminal to the NCR and amplified and forwarded to the base station by the NCR in the backhaul link, no corresponding method is available for determining a transmit beam for the uplink signal of the NCR either.

As can be learned from the foregoing description, the current solution does not provide a method for determining a receive beam for a downlink signal and a transmit beam for an uplink signal of the NCR in the backhaul link.

### SUMMARY

Embodiments of this application provide a method and an apparatus for determining a transmission configuration of a backhaul link, a relay device, and a network-side device, and provide a method for determining a receive beam for a downlink signal and/or a transmit beam for an uplink signal of an NCR in the backhaul link.

According to a first aspect, a method for determining a transmission configuration of a backhaul link is provided and includes:

   obtaining, by a relay device, a configurable candidate beam set of a control link; and
   determining, by the relay device, a transmission configuration indicator TCI configuration for a downlink signal and/or a sending configuration for an uplink signal of the backhaul link based on the candidate beam set.

According to a second aspect, a method for determining a transmission configuration of a backhaul link is provided and includes:

   determining, by a network-side device, a configurable candidate beam set of a control link;
   sending, by the network-side device, beam configuration signaling of the backhaul link to a relay device, where the beam configuration signaling is used to instruct the relay device to determine a transmission configuration indicator TCI configuration for a downlink signal and/or a sending configuration for an uplink signal of the backhaul link based on the configurable candidate beam set of the control link; and
   determining, by the network-side device, a transmit beam for the downlink signal and/or a receive beam for the uplink signal of the backhaul link based on the beam configuration signaling or a protocol specification.

According to a third aspect, an apparatus for determining a transmission configuration of a backhaul link is provided and includes:

a candidate beam set obtaining module, configured to obtain a configurable candidate beam set of a control link; and

a first configuration determining module, configured to determine a transmission configuration indicator TCI configuration for a downlink signal and/or a sending configuration for an uplink signal of the backhaul link based on the candidate beam set.

According to a fourth aspect, an apparatus for determining a transmission configuration of a backhaul link is provided and includes:

a candidate beam set determining module, configured to determine a configurable candidate beam set of a control link;

a first sending module, configured to send beam configuration signaling of the backhaul link to a relay device, where the beam configuration signaling is used to instruct the relay device to determine a transmission configuration indicator TCI configuration for a downlink signal and/or a sending configuration for an uplink signal of the backhaul link based on the configurable candidate beam set of the control link; and

a second configuration determining module, configured to determine a transmit beam for the downlink signal and/or a receive beam for the uplink signal of the backhaul link based on the candidate beam set and based on the beam configuration signaling or a protocol specification.

According to a fifth aspect, a relay device is provided and includes a processor and a memory. The memory stores a program or instructions capable of running on the processor. When the program or instructions are executed by the processor, the steps of the method according to the first aspect are implemented.

According to a sixth aspect, a network-side device is provided and includes a processor and a memory. The memory stores a program or instructions capable of running on the processor. When the program or instructions are executed by the processor, the steps of the method according to the second aspect are implemented.

According to a seventh aspect, a system for determining a transmission configuration of a backhaul link is provided and includes a relay device and a network-side device. The relay device may be configured to perform the steps of the method for determining a transmission configuration of a backhaul link according to the first aspect. The network-side device may be configured to perform the steps of the method for determining a transmission configuration of a backhaul link according to the second aspect.

According to an eighth aspect, a readable storage medium is provided. The readable storage medium stores a program or instructions. When the program or instructions are executed by a processor, the steps of the method according to the first aspect are implemented, or the steps of the method according to the second aspect are implemented.

According to a ninth aspect, a chip is provided. The chip includes a processor and a communication interface. The communication interface is coupled to the processor. The processor is configured to run a program or instructions to implement the method according to the first aspect or implement the method according to the second aspect.

According to a tenth aspect, a computer program or program product is provided. The computer program or program product is stored in a storage medium. The computer program or program product is executed by at least one processor to implement the steps of the method according to the first aspect or the second aspect.

According to an eleventh aspect, an embodiment of this application provides an apparatus for determining a transmission configuration of a backhaul link. The apparatus is configured to perform the steps of the method for determining a transmission configuration of a backhaul link according to the first aspect or the second aspect.

In the embodiments of this application, the relay device may obtain the configurable candidate beam set of the control link, and determine the TCI configuration for the downlink signal and/or the sending configuration for the uplink signal of the backhaul link based on the candidate beam set. In other words, in the embodiments of this application, a receive beam for the downlink signal and/or a transmit beam for the uplink signal of the backhaul link may be selected from the candidate beam set of the control link. Therefore, the embodiments of this application provide a method for determining a receive beam for a downlink signal and/or a transmit beam for an uplink signal of an NCR in the backhaul link.

**BRIEF DESCRIPTION OF DRAWINGS**

FIG. 1 is a block diagram of a wireless communication system to which an embodiment of this application may be applied;
FIG. 2 is a schematic diagram of transmission links between a base station, an NCR, and UE according to an embodiment of this application;
FIG. 3 is a flowchart of a method for determining a transmission configuration of a backhaul link according to an embodiment of this application;
FIG. 4 is a flowchart of another method for determining a transmission configuration of a backhaul link according to an embodiment of this application;
FIG. 5 is a block diagram of a structure of an apparatus for determining a transmission configuration of a backhaul link according to an embodiment of this application;

FIG. 6 is a block diagram of a structure of another apparatus for determining a transmission configuration of a backhaul link according to an embodiment of this application;

FIG. 7 is a block diagram of a structure of a communication device according to an embodiment of this application; and

FIG. 8 is a block diagram of a structure of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

To facilitate understanding of a method for determining a transmission configuration of a backhaul link in embodiments of this application, the following describes the related art.

First aspect: beam control of an access link.

Currently, a base station can control a beam of a control link of an NCR. For example, a receive/transmit beam number of the control link or an associated reference signal (Reference Signal, RS) number is indicated by using beam indication information, and the NCR adjusts the beam of the control link based on the indication of the base station.

Second aspect: method for indicating an uplink/downlink beam of a terminal in Rel-15.

For the downlink beam, the terminal needs to receive a broadcast signal, such as a synchronization signal block (Synchronization Signal Block, SSB), a channel state information-reference signal (Channel State Information-Reference Signal, CSI-RS), a cell-specific physical downlink control channel (cell-specific Physical Downlink Control Channel, cell-specific PDCCH), a cell-specific physical downlink shared channel (cell-specific Physical Downlink Shared Channel, cell-specific PDSCH), a UE-specific physical downlink control channel (UE-specific PDCCH), and a UE-specific physical downlink shared channel (UE-specific PDSCH). For each downlink signal and downlink physical channel, corresponding downlink beams need to be determined.

A method for determining the downlink beam of the terminal includes: implicitly determining the downlink beam from an SSB set according to a predefined rule, and explicitly determining the downlink beam based on downlink control information (Downlink Control Information, DCI), a media access control control element (Media Access Control Control Element, MAC CE), or radio resource control (Radio Resource Control, RRC) signaling.

Specifically, a network-side device may configure a transmission configuration indicator (Transmission Configuration Indicator, TCI) candidate set by using RRC signaling (such as a physical downlink shared channel configuration (PDSCH-config)), where the TCI candidate set includes M groups of TCI configuration information, and a value of M is determined by a terminal capability. Up to eight TCI configurations are selected from the M groups of TCI configuration information by using MAC CE activation signaling (activation command), and mapped to a DCI field 'Transmission Configuration Indicator (Transmission Configuration Indicator)'. The terminal determines a TCI configuration for a corresponding PDSCH by reading the DCI field 'Transmission Configuration Indicator (Transmission Configuration Indicator)'.

For the PDCCH, the network-side device may configure a corresponding TCI for each type of control resource set (CORESET). In addition, before a TCI is configured in a system or when activation signaling (that is, a MAC CE activation command) is not received, the terminal considers by default that an SSB used in a last random access process serves as a quasi-co-located (quasi co-location, QCL) reference beam for the PDCCH. Furthermore, after the terminal receives the MAC CE activation command, the configuration starts to take effect on the terminal in slot $k +$ $3N_{\text{slot}}^{\text{subframe},\mu}$ , where slot k is a slot in which a hybrid automatic repeat request acknowledgement (Hybrid automatic repeat request acknowledgement, HARQ-ACK) feedback message for the MAC CE activation command is located, and $N_{\text{slot}}^{\text{subframe},\mu}$ indicates a quantity of slots included in a subframe when a subcarrier bandwidth is set to $\mu$.

For the PDSCH, the network-side device may configure a TCI candidate set for the terminal and dynamically indicate TCI configuration information of the PDSCH by using DCI. If a TCI configuration set is not configured or not yet effective, the terminal uses an SSB used in a random access process as a quasi-co-located reference beam. A TCI of the PDSCH indicated by the DCI takes effect only after the terminal receives the DCI (that is, after a time duration for quasi co-location (time-DurationForQCL) slot). If a time offset of the scheduled PDSCH is shorter than the *timeDurationForQCL* slot, the terminal receives the PDSCH based on a last quasi-co-location configuration of the CORESET. A value of *time-DurationForQCL* may be predefined. For example, when a subcarrier spacing (SubCarrier Spacing, SCS) is 60 kHz, optional values are 7, 14, and 28; or when an SCS is less than 120 kHz, optional values are 14 and 28.

The terminal determines the uplink beam based on a sounding reference signal resource indicator (Sounding Reference Signal resource indicator, SRI) or the downlink beam. For example, for a physical uplink control channel (Physical Uplink Control Channel, PUCCH), the network-side device configures an uplink beam for the PUCCH by using a physical uplink control channel spatial relation (Physical Uplink Control Channel SpatialRelationInfo, PUCCH-SpatialRelationInfo) parameter. For example, an SSB or a channel state information-reference signal (Channel State Information-Reference Signal, CSI-RS) may be indicated, and in this case, a transmit beam (spatial domain filter) for the PUCCH corresponds to a receive beam for the SSB or CSI-RS; or an SRS is indicated, and in this case, a transmit beam for the PUCCH is the same as a transmit beam for the SRS. A transmit beam for a physical uplink shared channel (Physical Uplink Shared Channel, PUSCH) needs to be the same as the transmit beam for the PUCCH. If no PUCCH serves as a reference, a beam of a CORESET with a smallest number is used as a reference.

Third aspect: method for indicating an uplink/-downlink beam of a terminal in Rel-17.

A beam indication mechanism includes a TCI configuration, TCI state (state) activation, and a TCI indication.

For the TCI configuration and TCI state activation, uplink and downlink TCI configurations may be configured together or separately. For uplink and downlink TCI states that are configured together, eight TCI states may be activated by using a MAC CE. For uplink and downlink TCI states that are configured separately, a gNB may activate eight pairs of TCI states by using a MAC CE.

For a terminal in Rel-17, a 5G base station (NR NodeB, gNB) sends beam indication information (that is, TCI indication information) to indicate beams for an uplink signal and a downlink signal together. Content indicated by the beam indication information is one TCI state or a pair of TCI states activated by a MAC CE. A start time when TCI indication information is effective is x time units after an ACK corresponding to the TCI indication information is fed back, and an end time when the TCI indication information is effective is a start time when a next piece of TCI indication information is effective.

As can be learned from the foregoing description:

1. Different beams may be configured for downlink channels. For example, the PDCCH and the PDSCH may be configured with different TCIs, and CORESETs of different PDCCHs may be configured with different beams.
2. A beam for a downlink channel may be dynamically configured by using signaling.
3. A beam for an uplink channel may be determined based on a beam for a downlink channel or configured separately (SRI).

A method for determining a transmission configuration of a backhaul link according to embodiments of this application is hereinafter described in detail by using some embodiments and application scenarios thereof with reference to the accompanying drawings.

According to a first aspect, referring to FIG. 3, an embodiment of this application provides a method for determining a transmission configuration of a backhaul link. The method may include the following steps.

Step 301: A relay device obtains a configurable candidate beam set of a control link.

Optionally, the candidate beam set includes at least one of the following:

a beam corresponding to candidate TCI configuration information of the control link;
a beam corresponding to a downlink reference signal of the control link;
a beam corresponding to a downlink physical channel of the control link;
a beam corresponding to an uplink reference signal of the control link; and
a beam corresponding to an uplink physical channel of the control link.

A candidate TCI configuration is a TCI configuration that is available but does not take effect; the downlink reference signal of the control link may include an SSB and/or a CSI-RS; the downlink physical channel of the control link may include a PDCCH and/or a PDSCH; the uplink reference signal of the control link may include an SRS and/or a PRACH; and the uplink physical channel of the control link may include a PUCCH and/or a PUSCH.

Step 302: The relay device determines a transmission configuration indicator TCI configuration for a downlink signal and/or a sending configuration for an uplink signal of the backhaul link based on the candidate beam set.

The determining a TCI configuration for a downlink signal of the backhaul link is determining a receive beam for the downlink signal of the relay device in the backhaul link; and the determining a sending configuration for an uplink signal of the backhaul link is determining a transmit beam for the uplink signal of the relay device in the backhaul link.

In addition, a backhaul link and a PDSCH of an NCR have different transmission requirements. For example, a transmission time and a beam (that is, a TCI configuration) are determined for a dynamically scheduled PDSCH by using downlink control information DCI. The backhaul link of the NCR is one of relay links. The backhaul link carries a variety of downlink channels such as a PDSCH, a PDCCH, and an SSB to the terminal, and needs to be enabled for a long time, and beams need to remain unchanged for a long time. Similarly, the backhaul link carries a variety of uplink channels such as a PUCCH, a PUSCH, and an SRS from a plurality of terminals and needs to occupy a plurality of uplink slots. Therefore, an uplink of the backhaul link also needs to be enabled for a long time. Therefore, the NCR prefers to use a receive beam or transmit beam with a same duration as a beam configuration of the backhaul link. For a backhaul link enabled for a long time, a conventional dynamic beam indication method (that is, a dynamic beam indication for the PDSCH or the PUSCH) is not suitable for the backhaul link of the NCR. It may be understood that the TCI configuration for the downlink signal and the sending configuration for the uplink signal of the backhaul link can be effective for a long time, and the effective time may be specified by a protocol or explicitly indicated by a network or continue to be effective until a new TCI configuration for the downlink signal and a new sending configuration for the uplink signal take effect.

In this embodiment of this application, the relay device may obtain the configurable candidate beam set of the control link, and determine the TCI configuration for the downlink signal and/or the sending configuration for the uplink signal of the backhaul link based on the candidate beam set. In other words, in this embodiment of this application, the receive beam for the downlink signal and/or the transmit beam for the uplink signal of the backhaul link may be selected from the candidate beam set of the control link. Therefore, this embodiment of this application provides a method for determining a receive beam for a downlink signal and/or a transmit beam for an uplink signal of the NCR in the backhaul link.

Optionally, the TCI configuration for the downlink signal of the backhaul link includes at least one of the following:

a reference signal of the control link; and
a quasi-co-location QCL type.

The reference signal of the control link may be one of an SSB and a CSI-RS.

In addition, different QCL types correspond to different QCL parameters, or different QCL types indicate different QCL parameters. Therefore, QCL types included in the TCI configuration for the downlink signal can indicate different QCL parameters. Herein, the QCL parameter includes at least one of the following:

a spatial receiver parameter (Spatial Rx parameter);
a Doppler shift (Doppler shift);
Doppler spread (Doppler spread);
an average delay (average delay);
delay spread (delay spread); and
an average gain (average gain).

Optionally, that the relay device determines a TCI configuration for a downlink signal of the backhaul link based on the candidate beam set includes:

the relay device determines the TCI configuration for the downlink signal of the backhaul link based on the candidate beam set and a protocol specification; or
the relay device receives first configuration signaling sent by a network-side device; and

the relay device determines the TCI configuration for the downlink signal of the backhaul link based on the candidate beam set and the first configuration signaling.

Related information of the TCI configuration for the downlink signal of the backhaul link exists in the protocol specification or the first configuration signaling. Therefore, the relay device can determine the TCI configuration for the downlink signal of the backhaul link based on the candidate beam set of the control link and based on the protocol specification or the first configuration signaling.

As can be learned, in this embodiment of this application, the relay device can determine the receive beam for the downlink signal of the backhaul link in the following manner 1 or manner 2.

Manner 1: Determine the receive beam for the downlink signal of the backhaul link based on the candidate beam set of the control link and the protocol specification.

Manner 2: Determine the receive beam for the downlink signal of the backhaul link based on the candidate beam set of the control link and the received first configuration signaling.

It may be understood that the manner 1 and manner 2 herein can be combined into one solution. For example, when the network-side device does not configure the TCI for the downlink signal by using dedicated signaling (that is, the first configuration signaling), or before the TCI configuration configured by using the dedicated signaling starts to take effect or after the effective time thereof ends, the relay device may determine the receive beam for the downlink signal based on the protocol specification (that is, manner 1); and after receiving the dedicated signaling (that is, the first configuration signaling), determine the receive beam for the downlink signal based on the dedicated signaling.

The first configuration signaling may be a MAC CE, RRC signaling, or DCI.

For example, the network-side device may send a MAC CE (such as TCI activation signaling) or RRC signaling aperiodically or periodically to indicate the TCI configuration for the downlink signal of the backhaul link.

For another example, the network-side device may send DCI signaling in a dedicated CORESET or send DCI signaling in a dedicated format to indicate the TCI configuration for the downlink signal of the backhaul link. Specifically, for example, the DCI field 'Transmission Configuration Indicator (Transmission Configuration Indicator)' or a reserved field in the DCI may be reused (that is, the related information of the TCI configuration for the downlink signal of the backhaul link may be carried in the DCI field 'Transmission Configuration Indicator' or the reserved field in the DCI); or an a-bit field (for example, a = 1) in the DCI may be used to indicate whether 'Transmission Configuration Indicator' is used for the control link or the backhaul link.

In addition, the network-side device may configure the TCI configuration for the downlink signal when configuring a time period for enabling the backhaul link for the relay device. In other words, the first configuration signaling may be signaling for configuring the time period for enabling the backhaul link. Optionally, in a case that the relay device determines the TCI configuration for the downlink signal of the backhaul link based on the candidate beam set and the first configuration signaling, the TCI configuration for the downlink signal of the backhaul link takes effect from a time indicated by k+X, where

k represents a slot or a last symbol in which the first configuration signaling is located, or a slot or a last symbol in which a hybrid automatic repeat request acknowledgement feedback message corresponding to the first configuration signaling is located, and X is determined by the protocol specification or determined based on a capability of the relay device. In other words, a delay requirement needs to be met from receiving the dedicated signaling (that is, the first configuration signaling) by the relay device to the time when the TCI configuration for the downlink signal of the backhaul link of the relay device takes effect.

X        may        be        equal        to

$$x N_{\text{slot}}^{\text{subframe},\mu}, \quad N_{\text{slot}}^{\text{subframe},\mu}$$

indicates a quantity of slots included in a subframe when the subcarrier bandwidth is set to $\mu$, and x is a value defined by the protocol.

Optionally, the first configuration signaling may explicitly indicate the effective time of the TCI configuration for the downlink signal, including an effective start time point and/or an effective duration.

As can be learned, the first configuration signaling may further carry an effective time period or effective time period of the TCI configuration for the downlink signal. The effective time period or effective time period may include an enabling or working time period of the backhaul link. For example, the first configuration signaling is used to indicate the enabling or working time period of the backhaul link of the relay device and the corresponding TCI configuration for the downlink signal and the sending configuration for the uplink signal. In this case, the relay device receives the downlink signal and sends the uplink signal of the backhaul link by using the corresponding TCI configuration and the sending configuration for the uplink signal within the working time period configured by using the dedicated signaling.

It may be understood that after receiving a new TCI configuration for a downlink signal, and before the new TCI configuration for the downlink signal takes effect, the backhaul link of the relay device may work based on the protocol specification. For example, the original TCI configuration for the downlink signal is used for signal forwarding; or the signal is not forwarded until the new TCI configuration for the downlink signal takes effect.

Optionally, the relay device determines the TCI configuration for the downlink signal of the backhaul link based on the candidate beam set, which may include the following cases A-1 to A-4.

Case A-1: In a case that the protocol specification or the first configuration signaling indicates that a QCL relationship exists between the downlink reference signal and/or the downlink physical channel of the control link and the backhaul link, the TCI configuration for the downlink signal of the backhaul link is determined based on the downlink reference signal and/or the downlink physical channel of the control link.

The following describes case A-1 in detail.

A-1.1. Optionally, in a case that the protocol specification or the first configuration signaling indicates that a QCL relationship exists between the downlink reference signal of the control link and the backhaul link, a reference signal included in the TCI configuration for the downlink signal of the backhaul link is the downlink reference signal of the control link, and a QCL type is determined based on the protocol specification or a configuration of the network-side device.

In other words, "the TCI configuration for the downlink signal of the backhaul link is determined based on the downlink reference signal of the control link". Herein, a specific determining method may be as follows:

The reference signal included in the TCI configuration for the downlink signal of the backhaul link is the downlink reference signal of the control link, and the QCL type is determined based on the protocol specification or the configuration of the network-side device. For example, for the reference signal included in the TCI configuration for the downlink signal of the backhaul link, an SSB selected during random access of the control link is selected based on the protocol specification. For another example, for the reference signal included in the TCI configuration for the downlink signal of the backhaul link, a CSI-RS of the control link is selected based on the configuration of the network-side device. For another example, the reference signal included in the TCI configuration for the downlink signal of the backhaul link is a downlink reference signal last transmitted in the control link based on the protocol specification.

Optionally, a quasi-co-location parameter (that is, a parameter corresponding to the QCL type) may include at least one of parameters defined among the spatial Rx parameter (that is, QCL type D), average gain, and QCL types A, B, and C. For example, as specified by the protocol, the QCL type may be configured as QCL type D by default, or quasi-co-location parameters may be configured as QCL type D and average gain by default. An explicit configuration of the network may be several parameters among the quasi-co-location parameters herein.

The downlink reference signal may be an SSB or a CSI-RS. For example, the protocol specification indicates that a QCL relationship exists between the SSB or CSI-RS selected for the control link (such as a CSI-RS for tracking) (that is, the SSB or CSI-RS selected for the control link is used as a signal QCL-associated with the backhaul link) and the backhaul link. In this case, the reference signal in the TCI configuration for the downlink signal of the backhaul link is the SSB or the CSI-RS, and the QCL type in the TCI configuration for the downlink signal is specified by the protocol or configured by the network-side device (that is, a downlink beam of the backhaul link and the SSB or CSI-RS meet the QCL type specified by the protocol or configured by the network-side device). The SSB may be an SSB selected in a random access process of the relay device.

The following describes different cases where downlink reference signals QCL-associated with the backhaul link are an SSB and a CSI-RS respectively.

(1) If the protocol specification or the first configuration signaling indicates that a QCL association exists between the backhaul link and the SSB of the control link, an SSB used in a last random access process of the control link is selected as a QCL reference signal for the backhaul link of the relay device. Examples of specific implementation details are as follows:

Optionally, from a perspective of the relay device, on time-frequency resources for SSB transmission, the receive beam for the downlink signal of the backhaul link and a receive beam for the SSB of the control link meet the QCL type specified by the protocol or configured by the network side (that is, the receive beam for the downlink signal of the backhaul link is the same as the receive beam for the SSB of the control link); and from a perspective of the network-side device, on time-frequency resources for SSB transmission, a transmit beam for the downlink signal of the backhaul link is consistent with a transmit beam for the SSB of the control link.

Optionally, in a case that a QCL relationship exists between the SSB of the control link and the downlink signal of the backhaul link, and that second configuration signaling sent by the network-side device carries identification information (such as an SSB number) of the SSB, the reference signal included in the TCI configuration for the downlink signal of the backhaul link is an SSB corresponding to the identification information of the SSB carried in the second configuration signaling. The second configuration signaling may be a MAC CE, RRC, or DCI. In addition, the second configuration signaling may be the same as or different from the first configuration signaling.

The SSB indicated by the identification information of the SSB carried in the second configuration signaling may be different from the SSB in the random access process of the relay device.

(2) If the protocol specification or the first configuration signaling indicates that a QCL association exists between the backhaul link and the CSI-RS of the control link, the CSI-RS is selected as a QCL reference signal for the backhaul link of the relay device. Examples of specific implementation details are as follows:

Optionally, from the perspective of the relay device, on time-frequency resources for CSI-RS transmission, the receive beam for the downlink signal of the backhaul link and a receive beam for the CSI-RS of the control link meet the QCL type specified by the protocol or configured by the network side (that is, the receive beam for the downlink signal of the backhaul link is the same as the receive beam for the CSI-RS of the control link); and from the perspective of the network-side device, on time-frequency resources for CSI-RS transmission, the transmit beam for the downlink signal of the backhaul link is consistent with a transmit beam for the CSI-RS of the control link.

A-1.2. Optionally, in a case that the protocol specification or the first configuration signaling indicates that a QCL relationship exists between the downlink physical channel of the control link and the backhaul link, the TCI configuration for the downlink signal of the backhaul link is the same as or partially the same as a TCI configuration for the downlink physical channel of the control link.

In other words, "the TCI configuration for the downlink signal of the backhaul link is determined based on the downlink physical channel of the control link". Herein, a specific determining method may be as follows: The TCI configuration for the downlink signal of the backhaul link is the same as or partially the same as the TCI configuration for the downlink physical channel of the control link. Further, for example, based on the protocol specification, the TCI configuration for the downlink signal of the backhaul link is the same as or partially the same as a last TCI configuration for the downlink physical channel of the control link.

Optionally, being partially the same means that reference signals included in the TCI configurations are the same, and a QCL type is indicated by the protocol specification or a configuration message.

In other words, the protocol specification may be used to indicate that a QCL relationship exists between the downlink physical channel of the control link and the backhaul link, or the first configuration signaling may be used to indicate that a QCL relationship exists between the downlink physical channel of the control link and the backhaul link. In this case, the TCI configuration for the downlink signal of the backhaul link is the same as or partially the same as the TCI configuration for the downlink physical channel of the control link. For example, the reference signals in the two TCI configurations are the same, but the QCL types are different. In this case, the QCL types may be indicated separately by the network-side device or specified by the protocol.

Optionally, in a case that a QCL relationship exists between the downlink physical channel of the control link and the backhaul link, the TCI configuration for the downlink signal is the same as or partially the same as a TCI configuration corresponding to a spatial receiver parameter in the TCI configuration for the downlink physical channel.

In other words, the downlink physical channel QCL-associated with the backhaul link includes two TCI configurations. However, in this embodiment of this application, the TCI configuration for the downlink signal of the backhaul link is the same as or partially the same as the TCI configuration corresponding to the spatial receiver parameter (Spatial Rx parameter) (QCL Type D) in the two TCI configurations.

The downlink physical channel may be a PDCCH or a PDSCH. The following describes different cases where downlink physical channels QCL-associated with the backhaul link are a PDCCH and a PDSCH respectively.

(1) If the protocol specification or the first configuration signaling indicates that a QCL association exists between the backhaul link and the control link, the TCI configuration for the downlink signal of the backhaul link is the same as or partially the same as a TCI configuration for a specific search space (search space) or specific control resource set (CORESET) of the PDCCH. A method for determining the specific CORESET may be predefined by the protocol (for example, a CORESET corresponding to a type 0 PDCCH is specified as the specific CORESET, or a CORESET with a smallest CORESET number is specified as the specific CORESET), or may be configured by the network side (that is, signaling sent by the network-side device may carry identification information of the CORESET (for example, CORESET index, and in this case, the CORESET indicated by the identification information is the specific CORESET). Similarly, a method for determining the specific search space is similar to the method for determining the specific CORESET. Details are not described herein again.

In this case, examples of specific implementation details are as follows:
Optionally, from the perspective of the relay device, on time-frequency resources on which the specific search space or specific CORESET of the PDCCH is located, the TCI configuration for the downlink signal of the backhaul link is the same as or partially the same as a TCI configuration for the PDCCH in the specific SS or specific CORESET; and from the perspective of the network-side device, on time-frequency resources on which the specific search space or specific CORESET of the PDCCH is located, the transmit beam for the downlink signal of the backhaul link is consistent with a beam for the PDCCH in the specific SS or specific CORESET.

Optionally, from the perspective of the relay device, within v1 time units after the specific search space or specific CORESET of the PDCCH, the TCI configuration for the downlink signal of the backhaul link is the same as or partially the same as the TCI configuration for the PDCCH in the specific SS or specific CORESET; and from the perspective of the network-side device, within the v1 time units after the specific search space or specific CORESET of the PDCCH, the transmit beam for the downlink signal of the backhaul link is consistent with the beam for the PDCCH in the specific search space or specific CORESET. A value of v1 may be specified by the protocol or explicitly configured by the network side, or is always valid until a new TCI configuration is configured for the specific search space or specific CORESET, or is always valid until next transmission of the PDCCH of the control link. The time unit is, for example, a slot (slot) or a symbol (symbol) or a millisecond (ms).

(2) If the protocol specification or the first configuration signaling indicates that a QCL association exists between the backhaul link and the PDSCH of the control link, the TCI configuration for the downlink signal of the backhaul link is the same as or partially the same as a TCI configuration corresponding to the PDSCH.

Optionally, if a dynamic PDSCH and a semi-persistent PDSCH are scheduled in the control link, a TCI configuration corresponding to the semi-persistent PDSCH may be preferentially selected for the downlink signal of the backhaul link (that is, the TCI configuration for the downlink signal of the backhaul link is the same as or partially the same as the TCI configuration corresponding to the semi-persistent PDSCH). In other words, the control link includes a dynamically scheduled PDSCH and a semi-persistently scheduled (Semi-Persistent Scheduling, SPS) PDSCH. Considering that the backhaul link needs to be enabled for a long time, the TCI configuration for the downlink signal of the backhaul link may be the same as or partially the same as the TCI configuration corresponding to the semi-persistently scheduled PDSCH of the control link.

In this case, examples of specific implementation details are as follows:
Optionally, from the perspective of the relay device, within v2 time units after the PDSCH is transmitted, the TCI configuration for the downlink signal of the backhaul link is the same as or partially the same as the TCI configuration for the PDSCH of the control link; and from the perspective of the network-side device, within the v2 time units after the PDSCH is transmitted, the transmit beam for the downlink signal of the backhaul link is consistent with a beam for the PDSCH of the control link. Optionally, a value of v2 may be specified by the protocol or explicitly configured by the network side, or is always valid until a new TCI configuration is configured for the PDSCH, or is always valid until next transmission of the PDSCH of the control link.

Optionally, for the semi-persistently scheduled PDSCH, from the perspective of the relay device, starting from v3 time units after SPS PDSCH activation signaling is sent, the TCI configuration for the downlink signal of the backhaul link is the same as or partially the same as a TCI configuration for the semi-persistently scheduled PDSCH of the control link; and from the perspective of the network-side device, starting from the v3 time units after the SPS PDSCH activation signaling is sent, the transmit beam for the downlink signal of the backhaul link is consistent with a beam for the semi-persistently scheduled PDSCH of the control link. The v3 time units are greater than or equal to a duration for quasi-co-location (timeDurationForQCL).

Optionally, from the perspective of the relay device, starting from v4 time units after feedback signaling corresponding to the SPS PDSCH activation signaling is sent, the TCI configuration for the downlink signal of the backhaul link is the same as or partially the same as the TCI configuration for the semi-persistently scheduled PDSCH of the control link; and from the perspective of the network-side device, starting from the v4 time units after the feedback signaling corresponding to the SPS PDSCH activation signaling is sent, the transmit beam for the downlink signal of the backhaul link is consistent with the beam for the semi-persistently scheduled PDSCH of the control link. The v4 time units are greater than or equal to the duration for quasi-co-location (timeDurationForQCL).

Optionally, from the perspective of the relay device, starting from a first SPS PDSCH resource, the TCI configuration for the downlink signal of the backhaul link is the same as or partially the same as the TCI configuration for the semi-persistently scheduled PDSCH of the control link; and from the perspective of the network-side device, starting from the first SPS PDSCH resource, the transmit beam for the downlink signal of the backhaul link is consistent with the beam for the semi-persistently scheduled PDSCH of the control link.

Optionally, from the perspective of the relay device, within v5 time units after the semi-persistently scheduled PDSCH of the control link is transmitted, the TCI configuration for the downlink signal of the backhaul link is the same as or partially the same as the TCI configuration for the semi-persistently scheduled PDSCH of the control link; and from the perspective of the network-side device, within the v5 time units after the semi-persistently scheduled PDSCH of the control link is transmitted, the transmit beam for the downlink signal of the backhaul link is consistent with the beam for the semi-persistently scheduled PDSCH of the control link. The time unit is, for example, a slot (slot) or a symbol (symbol) or a millisecond (ms).

Optionally, from the perspective of the relay device, within v6 time units after a last valid SPS PDSCH, the TCI configuration for the downlink signal of the backhaul link is the same as or partially the same as the TCI configuration for the semi-persistently scheduled PDSCH of the control link; and from the perspective of the network-side device, within the v6 time units after the last valid SPS PDSCH, the transmit beam for the downlink signal of the backhaul link is consistent with the beam for the semi-persistently scheduled PDSCH of the control link.

Optionally, from the perspective of the relay device, within v7 time units after the relay device receives SPS deactivation signaling, the TCI configuration for the downlink signal of the backhaul link is the same as or partially the same as the TCI configuration for the semi-persistently scheduled PDSCH of the control link; and from the perspective of the network-side device, within the v7 time units after the relay device receives the SPS deactivation signaling, the transmit beam for the downlink signal of the backhaul link is consistent with the beam for the semi-persistently scheduled PDSCH of the control link.

It should be noted herein that a TCI configuration for the semi-persistent PDSCH is effective until the control link receives new TCI activation signaling or configuration signaling indicating a new TCI configuration for the semi-persistent PDSCH, or until a time when TCI indication information of new semi-persistent PDSCH activation signaling or configuration signaling starts to take effect.

In other words, after the effective time of the TCI configuration of the current backhaul link ends, the TCI configuration for the downlink signal of the backhaul link is redetermined for the backhaul link of the relay device based on the candidate beam set and based on the protocol specification or the indication of the first configuration signaling. For example, after the semi-persistent PDSCH is deactivated, the TCI configuration for the downlink signal of the backhaul link is determined based on a TCI configuration for the dynamically scheduled PDSCH or PDCCH or the SSB selected in the last random access process of the control link.

In addition, it should be noted that, for a time period when the beam for the PDCCH/PDSCH/CSI-RS does not take effect (for example, in a scenario, the PDCCH/PDSCH/CSI-RS is not configured with a beam, or is configured with a beam but the beam does not take effect), the receive beam for the downlink signal of the backhaul link of the relay device may be an SSB beam by default, or a beam indicated by dedicated signaling.

Case A-2: In a case that the first configuration signaling includes target identification information, the TCI configuration for the downlink signal of the backhaul link is the same as or partially the same as a TCI configuration indicated by the target identification information, where the target identification information indicates one TCI configuration in a candidate TCI configuration set of the control link.

Optionally, the TCI configuration indicated by the target identification information is one of M candidate TCI configurations indicated in higher-layer configuration information or one of N TCI configurations indicated in a TCI activation command of the control link, where both M and N are integers greater than 0; and the N TCI configurations are part of the M TCI configurations.

In other words, the TCI configuration for the downlink signal of the backhaul link of the relay device may be selected from the M candidate TCI configurations provided in the higher-layer configuration information (for example, PDSCH-Config) or selected from the N TCI configurations in the TCI activation command of the MAC CE of the control link.

For example, a base station may first configure M candidate TCI configurations for the control link of the NCR by using RRC signaling, and then select N configurations from the M candidate TCI configurations for the control link of the relay device by using MAC CE signaling, to select one from the M candidate TCI configurations or one from the N candidate TCI configurations, and carry the selected TCI configuration by using DCI.

It may be understood that the M candidate TCI configurations in the higher-layer configuration information (PDSCH-Config) or the N candidate TCI configurations in the TCI activation command are configured based on the SSB or CSI-RS in the control link of the relay device. Therefore, this is essentially a special case that the downlink reference signal in the control link of the relay device is used as a QCL-associated signal of the backhaul link (that is, a special case for the foregoing case 1).

Case A-3: In a case that the first configuration signaling includes a TCI configuration, the TCI configuration for the downlink signal of the backhaul link is the TCI configuration in the first configuration signaling.

In other words, a specific parameter of the TCI configuration of the backhaul link of the relay device may also be directly indicated by using dedicated signaling (that is, the first configuration signaling). For example, indication information (such as an ID) of the CSI-RS or SSB in the control link and the QCL type are indicated in the first configuration signaling.

If the QCL type is indicated in the protocol specification (that is, by default), the indication of the QCL type may be omitted in the first configuration signaling.

Optionally, it should be noted that the relay device keeps the existing QCL relationship and TCI configuration unchanged in a case that the relay device does not receive a new QCL configuration (that is, the downlink reference signal of the control link QCL-associated with the backhaul link of the relay device does not change, and the QCL type associated with the two does not change) or a TCI configuration for a reference channel (that is, the downlink physical channel of the control link QCL-associated with the backhaul link of the relay device) does not change.

Case A-4: Optionally, the TCI configuration for the downlink signal of the backhaul link is determined based on either the downlink reference signal or the downlink physical channel of the control link, whichever has a higher priority or is closer to a current time.

As can be learned, based on the protocol specification, priorities of downlink reference signals (such as the CSI-RS and the SSB) and downlink physical channels (such as the PDCCH and the PDSCH) may be defined for selecting a physical channel of the control link. For example, assuming that a priority of the SSB is lower than a priority of the PDCCH and that the priority of the PDCCH is lower than a priority of the PDSCH, when no dedicated TCI is configured for the PDCCH and the PDSCH, the SSB is selected as a reference channel in the QCL configuration for the backhaul link of the relay device; if the network-side device has configured a TCI for the PDCCH but no TCI for the PDSCH, the TCI configuration for the PDCCH is selected for the backhaul link of the relay device to work; or if the network-side device has configured a TCI for the PDSCH, the TCI configuration for the PDSCH is selected for the backhaul link of the relay device to work. Further, for example, a highest priority is defined for the CORESET with the smallest CORESET number among a plurality of different types of CORESETs for the PDCCH of the control link. For another example, the control link is configured with a plurality of CSI-RSs and/or SSBs, and a reference signal with a smallest port number is preferentially selected as the reference signal included in the TCI configuration for the downlink signal of the backhaul link. For another example, the control link is configured with the dynamically scheduled PDSCH and the semi-persistently scheduled PDSCH, and the TCI configuration for the semi-persistently scheduled PDSCH is preferentially selected as the TCI configuration for the downlink signal of the backhaul link.

Similarly, it may also be assumed that the priority of the SSB is lower than the priority of the PDSCH and that the priority of the PDSCH is lower than the priority of the PDCCH, and a similar channel or reference signal selection solution is defined. Details are not described herein again.

In addition, a TCI configuration used for transmission in last transmission of a physical channel (one of the SSB, the PDCCH, the PDSCH, and the CSI-RS) of the control link before the backhaul link of the relay device is enabled may also be selected based on a proximity principle.

In addition, the protocol specification may also indicate that the TCI configuration for the downlink signal is determined based on a priority of a working protocol version of the control link. For example, a TCI configuration for a downlink signal of the control link is configured for the control link based on the Rel-17 protocol version (that is, the TCI configuration for the downlink signal is configured by using higher-layer signaling information DLorJoint-TCIState or UL-TCIState). In this case, for the backhaul link, the candidate beam set is preferentially determined based on the TCI configuration for the Rel-17 protocol version of the control link, or a TCI configuration for a physical channel of the control link is determined or directly used as the TCI configuration for the downlink signal of the backhaul link and the corresponding sending configuration for the uplink signal.

The solution to determining the TCI configuration for the downlink signal of the backhaul link based on the candidate beam set of the backhaul link, which includes the candidate TCI configuration set of the control link configured in DLorJoint-TCIState or UL-TCIState, and the solutions described in the foregoing cases A-1 to A-4 are parallel solutions. Optionally, the solution to determining the TCI configuration for the downlink signal of the backhaul link based on the TCI configuration already activated for use in the candidate TCI configuration set configured in DLorJoint-TCIState or UL-TCIState may be set as a solution with a highest priority, that is, in presence of DLorJoint-TCIState or UL-TCIState, the TCI configuration for the downlink signal of the backhaul link is determined based on the TCI configuration in DLorJoint-TCIState or UL-TCIState; or in absence of DLorJoint-TCIState and UL-TCIState, the TCI configuration (PDSCH-Config) for the downlink signal of the control link is configured based on a Rel-15/16 protocol version, and the solutions described in the foregoing cases A-1 to A-4 are used to determine the candidate beam set.

Optionally, the method further includes: in a case that transmission of the backhaul link overlaps transmission of the control link within a target time, the relay device performs one of the following:

the relay device receives the downlink signal of the backhaul link by using a target TCI configuration, or forwards the uplink signal of the backhaul link by using a target uplink sending configuration; and the relay device skips forwarding the downlink signal of the backhaul link within the target time, or skips forwarding the uplink signal of the backhaul link within the target time, where

the target TCI configuration is one of TCI configurations used by the control link within the target time, and the target uplink sending configuration is an uplink sending configuration used by the control link within the target time; and

the target time includes at least one of a time unit of the transmission of the control link of the relay device, a time units before the transmission of the control link, and b time units after the transmission of the control link, where a and b represent integers greater than zero, and the time unit is one of an orthogonal frequency division multiplexing symbol, a slot, a subframe, and a radio frame.

In addition, the transmission of the control link of the relay device includes receiving a downlink signal and sending an uplink signal of the control link.

As can be learned, it may be specified that a priority of the TCI configuration for the downlink signal of the backhaul link of the relay device is lower than a priority of the TCI configuration of the control link of the relay device.

For example, when the transmission of the backhaul link of the relay device overlaps the transmission of the control link of the relay device (including receiving the downlink signal and sending the uplink signal of the control link) within the target time, the relay device may receive the downlink signal of the backhaul link by using the TCI configuration of the control link of the relay device, or forward the uplink signal by using the uplink sending configuration of the control link of the relay device; or the relay device may skip forwarding the signal of the backhaul link within a transmission time period of the control link.

Optionally, based on the protocol specification, in a case that transmission of different reference signals or physical channels of the control link overlaps the transmission of the backhaul link within a time, the solutions executed by the relay device may be determined separately. For example, for a transmission time period of the PDCCH or PDSCH of the control link, the backhaul link performs downlink signal transmission of the backhaul link based on the TCI configuration for the PDCCH or PDSCH of the control link; for a transmission time period of the PUCCH or PUSCH of the control link, the backhaul link skips performing uplink signal transmission; and for a transmission time period of the CSI-RS of the control link, the backhaul link skips performing downlink signal transmission.

Optionally, the method further includes:

when a TCI configuration of the control link is updated, or when the relay device receives a new TCI configuration for the downlink signal of the backhaul link that is sent by a network-side device, or when the relay device receives sixth configuration signaling sent by a network-side device, the relay device updates and activates the new TCI configuration for the downlink signal of the backhaul link, where

the sixth configuration signaling is used to instruct to update the TCI configuration for the downlink signal of the backhaul link.

As can be learned, the effective time of the TCI configuration for the downlink signal of the backhaul link may be static or adaptive.

For example, after being determined, the TCI configuration for the downlink signal of the backhaul link of the relay device is always effective, until the network-side device explicitly configures a new TCI configuration for the downlink signal of the backhaul link, or the TCI configuration for the physical channel of the control link used as a reference changes; or

for example, after being determined, the TCI configuration for the downlink signal of the backhaul link of the relay device is effective within a time period, and an effective duration is indicated by the protocol specification or indicated explicitly by the network-side device; or

for example, the TCI configuration for the downlink signal of the backhaul link of the relay device is always the same as or partially the same as the TCI configuration last used by the control link of the relay device, that is, the TCI configuration for the downlink signal of the backhaul link continues to be effective until next signal sending of the control link; or

for example, the protocol specification indicates that a QCL association exists between the backhaul link of the relay device and the PDCCH of the control link, and when the TCI configuration for the PDCCH of the control link is updated, the TCI configuration of the backhaul link of the relay device is also updated accordingly, and the effective time of the TCI configuration of the backhaul link is not earlier than the effective time of the TCI configuration of the control link (for example, the TCI configuration of the backhaul link takes effect immediately after the TCI configuration for the PDCCH of the control link takes effect); or

for example, the protocol specification indicates that a QCL association exists between the backhaul link of the relay device and the PDSCH of the control link, and when the TCI configuration for the PDSCH of the control link is updated, the TCI configuration of the backhaul link of the relay device is also updated accordingly, and the effective time of the TCI configuration of the backhaul link is not earlier than the effective time of the TCI configuration of the control link (for example, the TCI configuration of the backhaul link takes effect immediately after the TCI configuration for the PDSCH of the control link takes effect).

Optionally, after the relay device updates and activates the new TCI configuration for the downlink signal of the backhaul link, the method further includes: the relay device performs one of the following:

keeping an amplification factor of the downlink signal of the backhaul link unchanged;

adjusting the amplification factor of the downlink signal of the backhaul link based on a first amplification factor, where the first amplification factor is carried in third configuration signaling sent by the network-side device; and

adjusting the amplification factor of the downlink signal of the backhaul link based on a difference between a first channel measurement result and a second channel measurement result, where the first channel measurement result and the second channel measurement result are respectively channel measurement results before and after the new TCI configuration for the downlink signal of the backhaul link is updated and activated.

In addition, the third configuration signaling may be the same as or different from the first configuration signaling. The channel measurement result may include: at least one of reference signal received power (Reference Signal Received Power, RSRP), reference signal received quality (Reference Signal Received Quality, RSRQ), and a signal to interference plus noise ratio (Signal to Interference plus Noise Ratio, SINR) after L1 filtering.

As can be learned, when the TCI configuration for the downlink signal is updated for the backhaul link of the relay device, one of the following solutions 1 to 3 may be used for processing the amplification factor of the downlink signal:

Solution 1: The amplification factor of the downlink signal of the backhaul link of the relay device remains unchanged.

Solution 2: If an adjustment value of the amplification factor is indicated by dedicated signaling (such as the third configuration signaling), the relay device updates the amplification factor of the downlink signal of the backhaul link based on the adjustment value.

Solution 3: The relay device adjusts the amplification factor of the downlink signal of the backhaul link by itself based on a difference between the channel measurement results before and after the TCI configuration for the downlink signal is updated.

Optionally, the sending configuration for the uplink signal of the backhaul link indicates that a transmit spatial domain filter for the uplink signal of the backhaul link is associated with one of the following:

a spatial receiver parameter (Spatial Rx parameter) for the downlink signal of the backhaul link;

a transmit spatial domain filter (Tx spatial domain filter) for an uplink signal of the control link; and

a receive spatial domain filter (Rx spatial domain filter) for a downlink signal of the control link.

The transmit beam for the uplink signal of the backhaul link of the relay device is a transmit spatial domain filter for the uplink signal, and indicates energy distribution of uplink signal energy in different directions.

As can be learned from the foregoing description, in this embodiment of this application, the sending configuration for the uplink signal of the backhaul link of the relay device may be determined based on the downlink signal of the backhaul link, or the uplink signal of the control link, or the downlink signal of the control link.

Optionally, that the relay device determines a sending configuration for an uplink signal of the backhaul link based on the candidate beam set includes:

the relay device directly determines the sending configuration for the uplink signal of the backhaul link based on the candidate beam set and a protocol specification;

or

the relay device receives fourth configuration signaling sent by a network-side device; and

the relay device determines the sending configuration for the uplink signal of the backhaul link based on the candidate beam set and the fourth configuration signaling;

or

the relay device determines the TCI configuration for the downlink signal of the backhaul link based on the candidate beam set; and

the relay device determines the sending configuration for the uplink signal of the backhaul link based on the TCI configuration for the downlink signal of the backhaul link and a protocol specification.

Related information of the sending configuration for the uplink signal of the backhaul link exists in the protocol specification or the fourth configuration signaling. Therefore, the relay device can determine the sending configuration for the uplink signal of the backhaul link based on the candidate beam set and based on the protocol specification or the fourth configuration signaling.

As can be learned, in this embodiment of this application, the relay device can determine the transmit beam for the uplink signal of the backhaul link in the following manner 1 or manner 2 or manner 3.

Manner 1: Directly determine the transmit beam for the uplink signal of the backhaul link based on the candidate beam set of the control link and the protocol specification.

Manner 2: Determine the transmit beam for the uplink signal of the backhaul link based on the candidate beam set of the control link and the received fourth configuration signaling.

Manner 3: The relay device determines the sending configuration for the uplink signal of the backhaul link based on the TCI configuration for the downlink signal of the backhaul link and the protocol specification after the relay device determines the TCI configuration for the downlink signal of the backhaul link based on the candidate beam set.

It may be understood that the manner 1 and manner 2 herein can be combined into one solution. For example, when the network-side device does not configure the transmit beam for the uplink signal by using dedicated signaling (that is, the fourth configuration signaling), the relay device may determine the transmit beam for the uplink signal based on the protocol pre-specification (that is, manner 1); and after receiving the dedicated signaling (that is, the fourth configuration signaling), determine the transmit beam for the uplink signal based on the dedicated signaling.

Similarly, herein manner 3 and manner 2 can be combined into one solution. For example, when the network-side device does not configure the transmit beam for the uplink signal by using dedicated signaling (that is, the fourth configuration signaling), the relay device may determine the transmit beam for the uplink signal based on the protocol pre-specification in manner 3; and after receiving the dedicated signaling (that is, the fourth configuration signaling), determine the transmit beam for the uplink signal based on the dedicated signaling.

The fourth configuration signaling may be a MAC CE, RRC, or DCI.

Optionally, the relay device determines the sending configuration for the uplink signal of the backhaul link, which may include the following cases B-1 to B-4.

Case B-1: The protocol specification indicates that a transmit spatial domain filter for the uplink signal of the backhaul link is associated with a spatial receiver parameter for the downlink signal of the backhaul link.

In other words, the transmit beam for the uplink signal of the backhaul link of the relay device may be the same as the receive beam for the downlink signal.

Case B-2: The protocol specification or the fourth configuration signaling indicates that the sending configuration for the uplink signal of the backhaul link is determined based on a configuration of the uplink reference signal and/or the uplink physical channel of the control link.

The uplink reference signal of the control link may be an SRS and/or a PRACH; and the uplink physical channel of the backhaul link may be a PUCCH or a PUSCH. In other words, the transmit beam for the uplink signal of the backhaul link of the relay device may be determined for the backhaul link of the relay device based on the PUCCH or PUSCH or SRS of the control link of the relay device. For example, the relay device determines the transmit beam for the uplink signal of the backhaul link based on a configuration of last uplink transmission (PUCCH or PUSCH or SRS).

The following separately describes different cases of determining the transmit beam for the uplink signal of the backhaul link of the relay device based on the PUCCH channel or PUSCH channel or SRS of the control link of the relay device.

(1) A transmit beam for the SRS is used as the transmit beam for the uplink signal of the backhaul link of the relay device. Specifically, on time-frequency resources for SRS transmission, the transmit beam for the uplink signal of the backhaul link of the relay device is consistent with the transmit beam for the SRS.

(2) A transmit beam for the PUCCH is used as the transmit beam for the uplink signal of the backhaul link of the relay device, which may be specifically one of the following:

on a time-frequency resource on which the PUCCH is located, the transmit beam for the uplink signal of the backhaul link of the relay device is consistent with the transmit beam for the PUCCH; and
within v8 time units after the PUCCH, the transmit beam for the uplink signal of the backhaul link of the relay device is consistent with the transmit beam for the PUCCH, where the time unit is, for example, a slot (slot) or a symbol (symbol) or a millisecond (ms).

(3) A transmit beam for the PUSCH is used as the transmit beam for the uplink signal of the backhaul link of the relay device, which may be specifically one of the following:

on a time-frequency resource for PUSCH transmission, the transmit beam for the uplink signal of the backhaul link of the relay device is consistent with the transmit beam for the PUSCH; starting from v9 time units after PUSCH scheduling signaling is sent, the transmit beam for the uplink signal of the backhaul link of the relay device is consistent with the transmit beam for the PUSCH; optionally, the v9 time units are greater than or equal to timeDurationForQCL; starting from v10 time units after semi-persistent PUSCH activation signaling is sent, the transmit beam for the uplink signal of the backhaul link of the relay device is consistent with the transmit beam for the semi-persistent PUSCH; starting from v11 time units after feedback signaling corresponding to semi-persistent PUSCH activation signaling is sent, the transmit beam for the uplink signal of the backhaul link of the relay device is consistent with the transmit beam for the semi-persistent PUSCH;

starting from a first semi-persistently scheduled PUSCH resource, the transmit beam for the uplink signal of the backhaul link of the relay device is consistent with the transmit beam for the semi-persistent PUSCH;

within v12 time units after the PUSCH is transmitted, the transmit beam for the uplink signal of the backhaul link of the relay device is consistent with the transmit beam for the PUSCH, where the time unit is, for example, a slot (slot) or a symbol (symbol) or a millisecond (ms);

within v13 time units after a last valid PUSCH of the semi-persistent PUSCH, the transmit beam for the uplink signal of the backhaul link of the relay device is consistent with the transmit beam for the semi-persistent PUSCH, where the time unit is, for example, a slot (slot) or a symbol (symbol) or a millisecond (ms); and

within v14 time units after the relay device receives semi-persistent PUSCH deactivation signaling, the transmit beam for the uplink signal of the backhaul link of the relay device is consistent with the transmit beam for the semi-persistent PUSCH.

It should be noted that a semi-persistent PUSCH resource is an effective resource until the control link receives new activation signaling or configuration signaling indicating a new transmission resource or transmission beam and other information for the semi-persistent PUSCH, or until a time when indication information of new activation signaling or configuration signaling starts to take effect.

In addition, for a time period, if the transmit beam for the uplink signal of the backhaul link of the relay device cannot be determined based on the beam for the PUCCH/PUSCH/SRS, the beam for the SSB/CSI-RS is used as a signal associated with the transmit beam for the uplink signal of the backhaul link of the relay device by default, and the SSB/CSI-RS is a downlink reference signal selected in last random access of the control link.

Case B-3: The protocol specification or the fourth configuration signaling indicates that the sending configuration for the uplink signal of the backhaul link is determined based on the downlink reference signal and/or the downlink physical channel of the control link.

A specific case of determining the sending configuration for the uplink signal based on the downlink reference signal and/or the downlink physical channel of the control link is similar to a specific case of determining the TCI configuration for the downlink signal based on the downlink reference signal and/or the downlink physical channel of the control link. For details, refer to the foregoing description. Details are not described herein again.

In addition, it should be noted that for the time period when the beam for the PDCCH/PDSCH/CSI-RS does not take effect, the transmit beam for the uplink signal of the backhaul link of the relay device may be a beam indicated by dedicated signaling.

Case B-4: The fourth configuration signaling indicates that one of target candidate configurations is the sending configuration for the uplink signal of the backhaul link, where the target candidate configuration includes a configuration indicated by uplink signal configuration information configured in the control link.

In other words, the uplink signal configuration information (PUCCH-SpatialRelationInfo) configured in the control link of the relay device may be used as candidate configurations for the transmit beam for the uplink signal of the backhaul link by using dedicated signaling (such as the fourth configuration signaling), and one of the candidate configurations may be indicated as the configuration for the transmit beam for the uplink signal of the backhaul link of the relay device. For example, in presence of DLorJoint-TCIState or UL-TCIState, the sending configuration for the uplink signal of the backhaul link of the relay device may be determined based on the TCI configuration in DLorJoint-TCIState or UL-TCIState. In absence of DLorJoint-TCIState and UL-TCIState, the solutions described in the foregoing cases B-1 to B-3 may be used to determine the configuration for the transmit beam for the uplink signal of the backhaul link of the relay device.

Optionally, after the uplink sending configuration of the backhaul link is updated, the method further includes:

the relay device performs one of the following:

keeping an amplification factor of the uplink signal of the backhaul link unchanged;
adjusting the amplification factor of the uplink signal of the backhaul link based on a second amplification factor, where the second amplification factor is carried in fifth configuration signaling sent by a network-side device; and
adjusting the amplification factor of the uplink signal of the backhaul link based on a difference between a third channel measurement result and a fourth channel measurement result, where

the third channel measurement result and the fourth channel measurement result are respectively channel measurement results before and after the sending configuration for the uplink signal of the backhaul link is updated.

In addition, it should be noted that updating of the uplink sending configuration of the backhaul link herein may be updating of the uplink sending configuration of the backhaul link by using the method for determining the uplink sending configuration in the foregoing cases B-1 to B-4.

In addition, the fifth configuration signaling may be the same as or different from the fourth configuration signaling. The channel measurement result may include: at least one of reference signal received power (Reference Signal Receiving Power, RSRP), reference signal received quality (Reference Signal Receiving Quality, RSRQ), and a signal to interference plus noise ratio (Signal to Interference plus Noise Ratio, SINR) after L1 filtering.

As can be learned, when the sending configuration for the uplink signal is updated for the backhaul link of the relay device, one of the following solutions 1 to 4 may be used for processing the amplification factor of the uplink signal:

Solution 1: The amplification factor of the uplink signal of the backhaul link of the relay device remains unchanged.

Solution 2: If an adjustment value (that is, a second adjustment value) of the amplification factor is indicated by dedicated signaling (such as the fifth configuration signaling), the relay device updates the amplification factor of the uplink signal of the backhaul link based on the adjustment value.

Solution 3: The relay device adjusts the amplification factor of the uplink signal of the backhaul link by itself based on a difference between the channel measurement results before and after the sending configuration for the uplink signal is updated.

Solution 4: The adjustment value of the amplification factor of the downlink signal of the backhaul link of the relay device is reused for the adjustment value of the amplification factor of the uplink signal of the backhaul link of the relay device.

The second adjustment value carried in the fifth configuration signaling may be an adjustment value with the amplification factor of the downlink signal as a reference or an adjustment value with the original amplification factor of the uplink signal as a reference.

It should be noted that the amplification factor of the uplink signal and the amplification factor of the downlink signal of the backhaul link of the relay device may be the same or different. The network-side device may also configure the amplification factor of the uplink signal and the amplification factor of the downlink signal (or an offset or a correction value of the amplification factor of the uplink signal relative to the amplification factor of the downlink signal) of the backhaul link separately.

In addition, optionally, for the backhaul link, within the time period when the TCI configuration of the control link in the Rel-17 protocol version (TCI configuration indicated in DLorJoint-TCIState or UL-TCIState) takes effect, the beams of the backhaul link and the control link may keep consistent, that is, the transmit beam for the downlink signal of the backhaul link of the relay device is consistent with a transmit beam for the downlink signal of the control link, and the transmit beam for the uplink signal of the backhaul link is consistent with a transmit beam for the uplink signal of the control link.

Optionally, for the backhaul link, within v14 time units after TCI indication information of the control link is sent, to v14 time units after next TCI indication information of the control link is sent, or to v15 time units after feedback information corresponding to next TCI indication information is sent, the receive beam for the downlink signal and the transmit beam for the uplink signal of the backhaul link of the relay device are determined based on a beam indicated by a TCI.

Optionally, for the SSB/PRACH of the control link, in a time domain unit in which some designated SRSs/CSI-RSs/CORESETs are located (or the time domain unit extends forward and/or backward for a time period), the beam determining methods described in the foregoing cases A-1 to A-4 and B-1 to B-4 may be used.

An effective time of the sending configuration for the uplink signal of the backhaul link of the relay device may be statically or adaptively or semi-statically indicated (that is, indicating an effective duration while indicating the sending configuration for the uplink signal of the backhaul link).

For example, after being determined, the sending configuration for the uplink signal of the backhaul link of the relay device is always effectively, until the network-side device explicitly configures a new sending configuration for the uplink signal of the backhaul link, or a sending configuration for a physical channel of the control link used as a reference changes; or

for example, after being determined, the sending configuration for the uplink signal of the backhaul link of the relay device is effectively within a time period, and the effective duration is indicated by the protocol specification or indicated explicitly by the network-side device; or

for example, the sending configuration for the uplink signal of the backhaul link of the relay device is always the same as a sending configuration last used by the control link of the relay device, that is, the sending configuration for the uplink signal of the backhaul link of the relay device continues to be effective until next uplink signal sending of the control link; or

for example, the protocol specification indicates that a QCL association exists between the backhaul link of the relay device and the PUCCH of the control link, and when a sending configuration for the PUCCH of the control link is updated, the sending configuration for the uplink signal is also updated for the backhaul link of the relay device accordingly, and the effective time of the sending configuration for the uplink signal of the backhaul link is not earlier than an effective time of the sending configuration for the PUCCH of the control link (for example, the sending configuration for the uplink signal of the backhaul link takes effect immediately after the sending configuration for the PUCCH of the control link takes effect); or

for example, the protocol specification indicates that a QCL association exists between the backhaul link of the relay device and the PUSCH of the control link, and when a sending configuration for the PUSCH of the control link is updated, the sending configuration for the uplink signal is also updated for the backhaul link of the relay device accordingly, and the effective time of the sending configuration for the uplink signal of the backhaul link is not earlier than an effective time of the sending configuration for the PUSCH of the control link (for example, the sending configuration for the uplink signal of the backhaul link takes effect immediately after the sending configuration for the PUSCH of the control link takes effect); or

for example, the protocol specification indicates that the uplink sending configuration of the backhaul link of the relay device is associated with the TCI configuration for the downlink signal of the backhaul link, and when the TCI configuration for the downlink signal of the backhaul link is updated, the sending configuration for the uplink signal is also updated for the backhaul link of the relay device accordingly, and the effective time of the sending configuration for the uplink signal of the backhaul link is not earlier than the effective time of the TCI configuration for the downlink signal of the backhaul link.

In addition, the relay device in this specification may be the NCR, or a relay device with a signal forwarding function such as a reconfigurable intelligent surface (Reconfigurable Intelligence Surface, RIS), a hypersurface, a reflective surface, or an intelligent reflective surface.

In summary, in this embodiment of this application, in a case that the control link and the backhaul link of the relay device share RF hardware, the transmit and receive beams of the backhaul link of the relay device may be determined by using beam training or beamforming information of the control link. In this way, complexity of beam control of the backhaul link of the relay device is reduced, and additional beam training overheads are avoided.

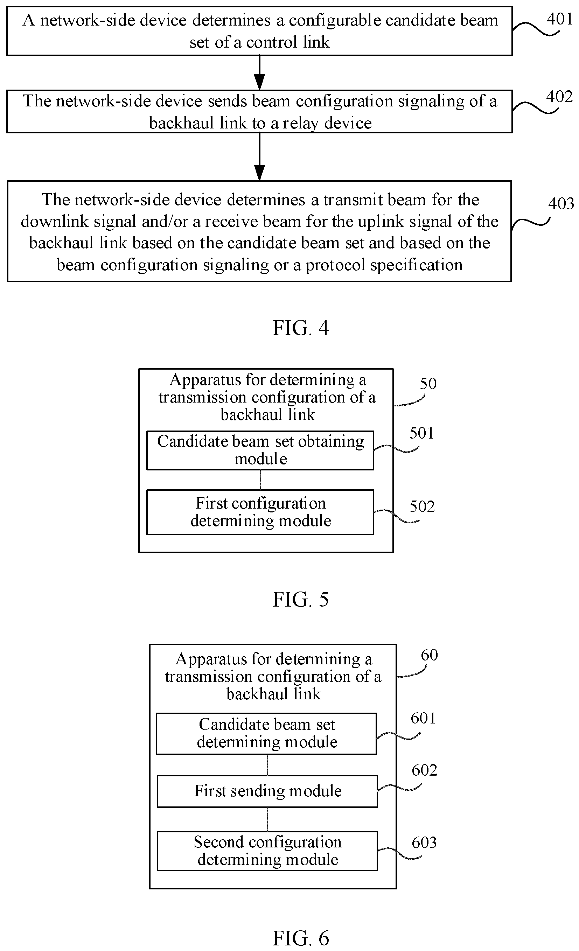

According to a second aspect, referring to FIG. 4, an embodiment of this application provides a method for determining a transmission configuration of a backhaul link. The method may include the following steps.

Step 401: A network-side device determines a configurable candidate beam set of a control link.

Step 402: The network-side device sends beam configuration signaling of the backhaul link to a relay device.

The beam configuration signaling is used to instruct the relay device to determine a transmission configuration indicator TCI configuration for a downlink signal and/or a sending configuration for an uplink signal of the backhaul link based on the configurable candidate beam set of the control link.

In addition, the beam configuration signaling may further include the foregoing first configuration signaling and/or fourth configuration signaling, where the first configuration signaling is used to instruct the relay device to determine the TCI configuration for the downlink signal of the backhaul link based on the candidate beam set of the control link, and the fourth configuration signaling is used to instruct the relay device to determine the sending configuration for the uplink signal of the backhaul link based on the candidate beam set of the control link.

In other words, indication information for instructing to determine the TCI configuration for the downlink signal of the backhaul link based on the candidate beam set of the control link, and indication information for instructing to determine the uplink sending configuration of the backhaul link based on the candidate beam set of the control link may be carried in a same piece of signaling, or may be carried in different signaling.

Step 403: The network-side device determines a transmit beam for the downlink signal and/or a receive beam for the uplink signal of the backhaul link based on the candidate beam set and based on the beam configuration signaling or a protocol specification.

Step 403 is to determine the transmit beam for the downlink signal and/or the receive beam for the uplink signal of the backhaul link of the network-side device.

Herein it should be noted that the backhaul link is a link between the relay device and the network-side device. In this case, on the backhaul link, the network-side device sends the downlink signal, and the relay device receives the downlink signal; the relay device sends the uplink signal, and the network-side device receives the uplink signal.

After the network-side device sends the beam configuration signaling to the relay device, the relay device may determine the transmission configuration indicator TCI configuration for the downlink signal and/or the sending configuration for the uplink signal of the backhaul link based on the candidate beam set of the control link (that is, determine a receive beam for the downlink signal and/or a transmit beam for the uplink signal of the relay device in the backhaul link), while the network-side device may determine the transmit beam for the downlink signal and/or the receive beam for the uplink signal of the backhaul link based on the candidate beam set of the control link and based on the beam configuration signaling or the protocol specification.

As can be learned, in this embodiment of this application, the network-side device may send the beam configuration signaling of the backhaul link to the relay device, so that the relay device can determine the TCI configuration for the downlink signal and/or the sending configuration for the uplink signal of the backhaul link based on the candidate beam set of the control link, and the network-side device can also determine the transmit beam for the downlink signal and/or the receive beam for the uplink signal of the backhaul link based on the candidate beam set of the control link and based on the beam configuration signaling or the protocol specification. In other words, in this embodiment of this application, the receive beam for the downlink signal and/or the transmit beam for the uplink signal of the relay device in the backhaul link, and the transmit beam for the downlink signal and/or the receive beam for the uplink signal of the network-side device in the backhaul link can be selected from the candidate beam set of the control link. Therefore, this embodiment of this application provides a method for determining a receive beam for a downlink signal and/or a transmit beam for an uplink signal in the backhaul link.

Optionally, the candidate beam set includes at least one of the following:

a beam corresponding to candidate TCI configuration information of the control link;
a beam corresponding to a downlink reference signal of the control link;
a beam corresponding to a downlink physical channel of the control link;
a beam corresponding to an uplink reference signal of the control link; and
a beam corresponding to an uplink physical channel of the control link.

A candidate TCI configuration is a TCI configuration that is available but does not take effect; the downlink reference signal of the control link may include an SSB and/or a CSI-RS; the downlink physical channel of the control link may include a PDCCH and/or a PDSCH; the uplink reference signal of the control link may include an SRS and/or a PRACH; and the uplink physical channel of the control link may include a PUCCH and/or a PUSCH.

Optionally, the network-side device determines the transmit beam for the downlink signal of the backhaul link based on the candidate beam set, which may include the following cases C-1 to C-4.

Case C-1: In a case that the protocol specification or the beam configuration signaling indicates that a QCL relationship exists between the downlink reference signal and/or the downlink physical channel of the control link and the backhaul link, the transmit beam for the downlink signal of the backhaul link is determined based on the downlink reference signal and/or the downlink physical channel of the control link.

The following describes case C-1 in detail.

C-1.1. Optionally, in a case that the protocol specification or the beam configuration signaling indicates that a QCL relationship exists between the downlink reference signal of the control link and the backhaul link, the transmit beam for the downlink signal of the backhaul link is the same as a transmit beam for the downlink reference signal of the control link.

The downlink reference signal of the control link may be an SSB or a CSI-RS.

The following describes different cases where downlink reference signals QCL-associated with the backhaul link are an SSB and a CSI-RS respectively.

(1) If the protocol specification or the beam configuration signaling indicates that a QCL association exists between the backhaul link and the SSB of the control link, the relay device selects a transmit beam for an SSB used in a last random access process of the control link as the transmit beam for the downlink signal of the backhaul link. Specific implementation details may be as follows:
Optionally, from a perspective of the network-side device, on time-frequency resources for SSB transmission, the transmit beam for the downlink signal of the backhaul link is consistent with the transmit beam for the SSB of the control link.

Optionally, in a case that a QCL relationship exists between the SSB of the control link and the backhaul link, and that second configuration signaling sent by the network-side device to the relay device carries identification information (such as an SSB number) of the SSB, the transmit beam for the downlink signal of the backhaul link is the same as the transmit beam for the SSB corresponding to the identification information of the SSB carried in the second configuration signaling. The second configuration signaling may be a MAC CE, RRC, or DCI. In addition, the second configuration signaling may be the same as or different from the beam configuration signaling.

The SSB indicated by the identification information of the SSB carried in the second configuration signaling may be different from the SSB in the random access process of the relay device.

(2) If the protocol specification or the beam configuration signaling indicates that a QCL association exists between the backhaul link and the CSI-RS of the control link, the CSI-RS is selected as a QCL reference beam for the backhaul link of the relay device. Examples of specific implementation details are as follows:
Optionally, from the perspective of the network-side device, on time-frequency resources for CSI-RS transmission, the transmit beam for the downlink signal of the backhaul link is consistent with a transmit beam for the CSI-RS of the control link.

C-1.2. In a case that the protocol specification or the beam configuration signaling indicates that a QCL relationship exists between the downlink physical channel of the control link and the backhaul link, the transmit beam for the downlink signal of the backhaul link is the same as a transmit beam for the downlink physical channel of the control link.

The downlink physical channel may be a PDCCH or a PDSCH. The following describes different cases where downlink physical channels QCL-associated with the backhaul link are a PDCCH and a PDSCH respectively.

(1) If the protocol specification or the beam configuration signaling indicates that a QCL association exists between the backhaul link and the PDCCH of the control link, specific implementation details may be as follows:

Optionally, from the perspective of the network-side device, on time-frequency resources on which a specific search space or a specific CORESET of the PDCCH is located, the transmit beam for the downlink signal of the backhaul link is consistent with a beam for the PDCCH in the specific SS or specific CORESET. A method for determining the specific CORESET may be predefined by the protocol (for example, a CORESET corresponding to a type 0 PDCCH is specified as the specific CORESET, or a CORESET with a smallest CORESET number is specified as the specific CORESET), or may be configured by the network side (that is, signaling sent by the network-side device may carry identification information of the CORESET (for example, CORESET index), and in this case, the CORESET indicated by the identification information is the specific CORESET). Similarly, a method for determining the specific search space is similar to the method for determining the specific CORESET. Details are not described herein again.

Optionally, from the perspective of the network-side device, within v1 time units after the specific search space or specific CORESET of the PDCCH, the transmit beam for the downlink signal of the backhaul link is consistent with the beam for the PDCCH in the specific search space or specific CORESET. The time unit is, for example, a slot (slot) or a symbol (symbol) or a millisecond (ms).

(2) If the protocol specification or the beam configuration signaling indicates that a QCL association exists between the backhaul link and the PDSCH of the control link, the transmit beam for the downlink signal of the backhaul link is the same as a transmit beam for the PDSCH.

Optionally, if a dynamic PDSCH and a semi-persistent PDSCH are scheduled in the control link, a transmit beam for the semi-persistent PDSCH may be preferentially selected as the transmit beam for the downlink signal of the backhaul link.

In other words, the control link includes a dynamically scheduled PDSCH and a semi-persistently scheduled (Semi-Persistent Scheduling, SPS) PDSCH. Considering that the backhaul link needs to be enabled for a long time, the transmit beam for the downlink signal of the backhaul link may be the same as the transmit beam for the semi-persistently scheduled PDSCH of the control link.

In this case, examples of specific implementation details are as follows:

Optionally, from the perspective of the network-side device, within v2 time units after the PDSCH is transmitted, the transmit beam for the downlink signal of the backhaul link is consistent with the beam for the PDSCH of the control link. Optionally, a value of v2 may be specified by the protocol or explicitly configured by the network side, or is always valid until a new TCI configuration is configured for the PDSCH, or is always valid until next transmission of the PDCCH/PDSCH of the control link.

Optionally, from the perspective of the network-side device, starting from v3 time units after SPS PDSCH activation signaling is sent, the transmit beam for the downlink signal of the backhaul link is consistent with the beam for the semi-persistently scheduled PDSCH of the control link. The v3 time units are greater than or equal to a duration for quasi-co-location (timeDurationForQCL).

Optionally, from the perspective of the network-side device, starting from v4 time units after feedback signaling corresponding to the SPS PDSCH activation signaling is sent, the transmit beam for the downlink signal of the backhaul link is consistent with the beam for the semi-persistently scheduled PDSCH of the control link. The v4 time units are greater than or equal to the duration for quasi-co-location (timeDurationForQCL).

Optionally, from the perspective of the network-side device, starting from a first SPS PDSCH resource, the transmit beam for the downlink signal of the backhaul link is consistent with the beam for the semi-persistently scheduled PDSCH of the control link.

Optionally, from the perspective of the network-side device, within v5 time units after the semi-persistently scheduled PDSCH of the control link is transmitted, the transmit beam for the downlink signal of the backhaul link is consistent with the beam for the semi-persistently scheduled PDSCH of the control link. The time unit is, for example, a slot (slot) or a symbol (symbol) or a millisecond (ms).

Optionally, from the perspective of the network-side device, within v6 time units after a last valid SPS PDSCH, the transmit beam for the downlink signal of the backhaul link is consistent with the beam for the semi-persistently scheduled PDSCH of the control link.

Optionally, from the perspective of the network-side device, within v7 time units after the relay device receives SPS deactivation signaling, the transmit beam for the downlink signal of the backhaul link is consistent with the beam for the semi-persistently scheduled PDSCH of the control link.

It should be noted herein that a TCI configuration for the semi-persistent PDSCH is effective until the control link receives new TCI activation signaling or configuration signaling indicating a new TCI configuration for the semi-persistent PDSCH, or until a time when TCI indication information of new semi-persistent PDSCH activation signaling or configuration signaling starts to take effect.

In other words, after an effective time of the transmit beam for the downlink signal of the current backhaul link ends, the transmit beam for the downlink signal of the backhaul link is redetermined for the backhaul link of the network-side device based on a physical channel of the control link and based on the protocol specification or the indication of the beam configuration signaling. For example, after the semi-persistent PDSCH is deactivated, the network-side device determines the transmit beam for the downlink signal of the backhaul link based on the transmit beam for the dynamically scheduled PDSCH or PDCCH or the transmit beam for the SSB selected in the last random access process of the control link.

In addition, it should be noted that, for a time period when the beam for the PDCCH/PDSCH/CSI-RS does not take effect (for example, in a scenario, the PDCCH/PDSCH/CSI-RS is not configured with a beam, or is configured with a beam but the beam does not take effect), the transmit beam for the downlink signal of the backhaul link of the network-side device may be an SSB beam by default, or a beam indicated by dedicated signaling.

C-1.3. The transmit beam for the downlink signal of the backhaul link is determined based on a transmit beam for either the downlink reference signal or the downlink physical channel of the control link, whichever has a higher priority or is closer to a current time.

As can be learned, based on the protocol specification, priorities of downlink reference signals (such as the CSI-RS and the SSB) and downlink physical channels (such as the PDCCH and the PDSCH) may be defined for selecting a physical channel of the control link. For example, assuming that a priority of the SSB is lower than a priority of the PDCCH and that the priority of the PDCCH is lower than a priority of the PDSCH, if no dedicated TCI is configured for the PDCCH and the PDSCH, the transmit beam for the downlink signal of the backhaul link of the network-side device is the same as the transmit beam for the SSB; if the network-side device has configured a TCI for the PDCCH but no TCI for the PDSCH, the transmit beam for the downlink signal of the backhaul link of the network-side device is the same as a transmit beam for the PDCCH; or if the network-side device has configured a TCI for the PDSCH, the transmit beam for the downlink signal of the backhaul link of the network-side device is the same as the transmit beam for the PDSCH. Further, for example, a highest priority is defined for the CORESET with the smallest CORESET number among a plurality of different types of CORESETs for the PDCCH of the control link. For another example, the control link is configured with a plurality of CSI-RSs and/or SSBs, and a transmit beam for a reference signal with a smallest port number is preferentially selected as the transmit beam for the downlink signal of the backhaul link of the network-side device. For another example, the control link is configured with the dynamically scheduled PDSCH and the semi-persistently scheduled PDSCH, and the transmit beam for the semi-persistently scheduled PDSCH is preferentially selected as the transmit beam for the downlink signal of the backhaul link of the network-side device. Similarly, it may also be assumed that the priority of the SSB is lower than the priority of the PDSCH and that the priority of the PDSCH is lower than the priority of the PDCCH. Details are not described herein again.

In addition, based on a proximity principle, the transmit beam for the downlink signal of the backhaul link of the network-side device may also be determined based on a beam for a physical channel (one of the SSB, the PDCCH, the PDSCH, and the CSI-RS) in last transmission of the control link before the backhaul link is enabled. Case C-2: In a case that the beam configuration signaling includes target identification information, the transmit beam for the downlink signal of the backhaul link is the same as a beam corresponding to a TCI configuration indicated by the target identification information, where the target identification information indicates one TCI configuration in a candidate TCI configuration set of the control link.

Optionally, the TCI configuration indicated by the target identification information is one of M candidate TCI configurations indicated in higher-layer configuration information or one of N TCI configurations indicated in a TCI activation command of the control link, where both M and N are integers greater than 0; and

the N TCI configurations are part of the M TCI configurations.

In other words, a TCI configuration corresponding to the transmit beam for the downlink signal of the backhaul link of the network-side device may be selected from the M candidate TCI configurations provided in the higher-layer configuration information (for example, PDSCH-Config) or selected from the N TCI configurations in the TCI activation command of the MAC CE of the control link.

Case C-3: In a case that the beam configuration signaling includes a TCI configuration, the transmit beam for the downlink signal of the backhaul link is a beam corresponding to the TCI configuration in the beam configuration signaling.

In other words, a specific parameter of the TCI configuration of the backhaul link of the relay device may also be directly indicated by using dedicated signaling (that is, the beam configuration signaling). In this case, the transmit beam for the downlink signal of the backhaul link of the network-side device is the same as the beam corresponding to the TCI configuration in the beam configuration signaling.

In addition, the protocol specification may also indicate that the transmit beam for the downlink signal of the backhaul link of the network-side device is determined based on a priority of a working protocol version of the control link. For example, a TCI configuration for a downlink signal of the control link is configured for the control link based on the Rel-17 protocol version (that is, the TCI configuration for the downlink signal is configured by using higher-layer signaling information DLorJoint-TCIState or UL-TCIState). In this case, for the backhaul link, the candidate beam set is preferentially determined based on a beam corresponding to the TCI configuration for the Rel-17 protocol version of the control link or a TCI configuration for a physical channel of the control link is determined or directly used as the transmit beam for the downlink signal of the backhaul link of the network-side device and the corresponding receive beam for the uplink signal.

The solution to determining the transmit beam for the downlink signal of the backhaul link of the network-side device based on the candidate beam set of the backhaul link, which includes the candidate TCI configuration set of the control link configured in DLorJoint-TCIState or UL-TCIState, and the solutions described in the foregoing cases C-1.1 to C-1.3, C-2, and C-3 are parallel solutions. Optionally, the solution to determining the transmit beam for the downlink signal of the backhaul link of the network-side device based on the TCI configuration already activated for use in the candidate TCI configuration set configured in DLorJoint-TCIState or UL-TCIState may be set as a solution with a highest priority. In other words, in presence of DLorJoint-TCIState or UL-TCIState, the transmit beam for the downlink signal of the backhaul link is determined based on the TCI configuration in DLorJoint-TCIState or UL-TCIState; or in absence of DLorJoint-TCIState and UL-TCIState, the solutions described in the foregoing cases C-1.1 to C-1.3, C-2, and C-3 may be used.

Optionally, the method further includes:
in a case that transmission of the backhaul link overlaps transmission of the control link within a target time, the network-side device performs one of the following:

the network-side device sends the downlink signal of the backhaul link by using a target transmit beam, or receives the uplink signal of the backhaul link by using a target receive beam; and
the network-side device skips sending the downlink signal of the backhaul link within the target time, or skips receiving the uplink signal of the backhaul link within the target time, where
the target transmit beam is a downlink transmit beam used by the control link within the target time, and the target receive beam is an uplink receive beam used by the control link within the target time; and
the target time includes at least one of a time unit of the transmission of the control link of the network-side device, a time units before the transmission of the control link, and b time units after the transmission of the control link, where a and b represent integers greater than zero, and the time unit is one of an orthogonal frequency division multiplexing symbol, a slot, a subframe, and a radio frame.

In addition, the transmission of the control link of the network-side device includes sending a downlink signal and receiving an uplink signal of the control link.

As can be learned, it may be specified that a priority of the transmit beam for the downlink signal of the backhaul link of the network-side device is lower than a priority of a transmit beam for the downlink signal of the control link of the network-side device.

For example, when the transmission of the backhaul link of the network-side device overlaps the transmission of the control link of the network-side device (including receiving the downlink signal and sending the uplink signal of the control link) within the target time, the network-side device may transmit the downlink signal of the backhaul link by using the transmit beam for the downlink signal of the control link of the network-side device, or receive the uplink signal of the backhaul link by using the receive beam for the uplink signal of the control link of the network-side device; or the network-side device may skip signal transmission of the backhaul link within a transmission time period of the control link.

Optionally, based on the protocol specification, on the network-side device, in a case that transmission of different reference signals or physical channels of the control link overlaps the transmission of the backhaul link within a time, the solutions executed by the network-side device may be determined separately. For example, for a transmission time period of the PDCCH or PDSCH of the control link, the backhaul link of the network-side device sends the downlink signal of the backhaul link based on a TCI configuration for the PDCCH or PDSCH of the control link; for a transmission time period of the PUCCH or PUSCH of the control link, the backhaul link of the network-side device skips receiving the uplink signal; and for a transmission time period of the CSI-RS of the control link, the backhaul link of the network-side device skips sending the downlink signal.

In addition, the effective time of the transmit beam for the downlink signal of the backhaul link of the network-side device may be static or adaptive or semi-static.

For example, after being determined, the transmit beam for the downlink signal of the backhaul link of the network-side device is always effective, until a new transmit beam for the downlink signal of the backhaul link is configured, or a transmit beam for a physical channel of the control link used as a reference changes; or

for example, after being determined, the transmit beam for the downlink signal of the backhaul link of the network-side device is effective within a time period, and an effective duration is indicated by the protocol specification; or
for example, the transmit beam for the downlink signal of the backhaul link of the network-side device is always consistent with a transmit beam last used by the control link, that is, the transmit beam for the downlink signal of the backhaul link continues to be effective until next signal sending of the control link; or
for example, the protocol specification indicates that a QCL association exists between the backhaul link and the PDCCH of the control link, and when the transmit beam for the PDCCH of the control link is updated, the transmit beam for the downlink signal is also updated for the backhaul link of the network-side device accordingly, and the effective time of the transmit beam for the downlink signal of the backhaul link is not earlier than an effective time of the transmit beam for the PDCCH of the control link (for example, the transmit beam of the backhaul link takes effect immediately after the transmit beam for the PDCCH of the control link takes effect); or

for example, the protocol specification indicates that a QCL association exists between the backhaul link and the PDSCH of the control link, and when a TCI configuration for the PDSCH of the control link is updated, the transmit beam for the downlink signal is also updated for the backhaul link of the network-side device accordingly, and the effective time of the transmit beam for the downlink signal of the backhaul link is not earlier than an effective time of the transmit beam for the PDSCH of the control link (for example, the transmit beam of the backhaul link takes effect immediately after the transmit beam for the PDSCH of the control link takes effect).

Optionally, the method further includes:
the network-side device sends sixth configuration signaling to the relay device, where the sixth configuration signaling is used to instruct to update the TCI configuration for the downlink signal of the backhaul link.

In other words, the network-side device may also instruct the relay device when to update the TCI configuration for the downlink signal of the backhaul link.

Optionally, the network-side device determines a receiving configuration for the uplink signal of the backhaul link based on the candidate beam set, which may include the following cases D-1 to D-4.

Case D-1: The protocol specification indicates that the receive beam for the uplink signal of the backhaul link is the same as the transmit beam for the downlink signal of the backhaul link.

In other words, the receive beam for the uplink signal of the backhaul link of the network-side device may be the same as the transmit beam for the downlink signal.

Case D-2: The protocol specification or the beam configuration signaling indicates that the receive beam for the uplink signal of the backhaul link is determined based on a receive beam for the uplink reference signal and/or the uplink physical channel of the control link.

The uplink reference signal of the control link may be an SRS and/or a PRACH; and the uplink physical channel of the backhaul link may be a PUSCH or a PUSCH. In other words, the receive beam for the uplink signal of the backhaul link of the network-side device may be determined for the backhaul link of the network-side device based on the PUCCH channel or PUSCH channel or SRS or PRACH of the control link. For example, the network-side device determines the receive beam for the uplink signal of the backhaul link based on a beam in last uplink transmission (PUCCH or PUSCH or SRS or PRACH).

The following separately describes different cases of determining the receive beam for the uplink signal of the backhaul link of the network-side device based on the PUCCH channel or PUSCH channel or SRS or PRACH of the control link of the network-side device.

(1) A receive beam for the SRS is used as the receive beam for the uplink signal of the backhaul link of the network-side device. Specifically, on time-frequency resources for SRS transmission, the receive beam for the uplink signal of the backhaul link of the network-side device is consistent with the receive beam for the SRS.

(2) A receive beam for the PUCCH is used as the receive beam for the uplink signal of the backhaul link of the network-side device, which may be specifically one of the following:

on a time-frequency resource on which the PUCCH is located, the receive beam for the uplink signal of the backhaul link of the network-side device is consistent with the receive beam for the PUCCH; and
within v8 time units after the PUCCH, the receive beam for the uplink signal of the backhaul link of the network-side device is consistent with the receive beam for the PUCCH, where the time unit is, for example, a slot (slot) or a symbol (symbol) or a millisecond (ms).

(3) A receive beam for the PUSCH is used as the receive beam for the uplink signal of the backhaul link of the network-side device, which may be specifically one of the following:

on a time-frequency resource for PUSCH transmission, the receive beam for the uplink signal of the backhaul link of the network-side device is consistent with the receive beam for the PUSCH;
starting from v9 time units after PUSCH scheduling signaling is sent, the receive beam for the uplink signal of the backhaul link of the network-side device is consistent with the receive beam for the PUSCH; optionally, the v9 time units are greater than or equal to timeDurationForQCL;
starting from v10 time units after semi-persistent PUSCH activation signaling is sent, the receive beam for the uplink signal of the backhaul link of the network-side device is consistent with the receive beam for the semi-persistent PUSCH;
starting from v11 time units after feedback signaling corresponding to semi-persistent PUSCH activation signaling is sent, the receive beam for the uplink signal of the backhaul link of the network-side device is consistent with the receive beam for the semi-persistent PUSCH;

starting from a first semi-persistently scheduled PUSCH resource, the receive beam for the uplink signal of the backhaul link of the network-side device is consistent with the receive beam for the semi-persistent PUSCH; and

within v12 time units after the PUSCH is transmitted, the receive beam for the uplink signal of the backhaul link of the network-side device is consistent with the receive beam for the PUSCH, where the time unit is, for example, a slot (slot) or a symbol (symbol) or a millisecond (ms);

within v13 time units after a last valid PUSCH of the semi-persistent PUSCH, the receive beam for the uplink signal of the backhaul link of the network-side device is consistent with the receive beam for the semi-persistent PUSCH, where the time unit is, for example, a slot (slot) or a symbol (symbol) or a millisecond (ms); and

within v14 time units after the network-side device sends semi-persistent PUSCH deactivation signaling, the receive beam for the uplink signal of the backhaul link of the network-side device is consistent with the receive beam for the semi-persistent PUSCH.

It should be noted that a semi-persistent PUSCH resource is an effective resource until the control link receives new activation signaling or configuration signaling indicating a new transmission resource or transmission beam and other information for the semi-persistent PUSCH, or until a time when indication information of new activation signaling or configuration signaling starts to take effect.

In addition, for a time period, if the receive beam for the uplink signal of the backhaul link of the network-side device cannot be determined based on the beam for the PUCCH/PUSCH/SRS, the receive beam for the SSB/CSI-RS is used as the receive beam for the uplink signal of the backhaul link of the network-side device by default, and the SSB/CSI-RS is a downlink reference signal selected in last random access of the control link.

Case D-3: The protocol specification or the beam configuration signaling indicates that the receive beam for the uplink signal of the backhaul link is determined based on a transmit beam for the downlink reference signal and/or the downlink physical channel of the control link.

A specific case of determining the receive beam for the uplink signal of the backhaul link of the network-side device based on the downlink reference signal and/or the downlink physical channel of the control link is similar to a specific case of determining the transmit beam for the downlink signal of the backhaul link of the network-side device based on the downlink reference signal and/or the downlink physical channel of the control link. For details, refer to the foregoing description. Details are not described herein again.

In addition, it should be noted that for the time period when the beam for the PDCCH/PDSCH/CSI-RS does not take effect, the receive beam for the uplink signal of the backhaul link of the network-side device may be a beam indicated by dedicated signaling.

Case D-4: The beam configuration signaling indicates that a beam corresponding to one of target candidate configurations is the receive beam for the uplink signal of the backhaul link, where the target candidate configuration includes a configuration indicated by uplink signal configuration information configured in the control link.

In other words, the uplink signal configuration information (PUCCH-SpatialRelationInfo) configured in the control link of the network-side device may be used as candidate configurations for the receive beam for the uplink signal of the backhaul link by using dedicated signaling (such as the beam configuration signaling), and a beam corresponding to one of the configurations may be indicated as the receive beam for the uplink signal of the backhaul link of the network-side device. For example, in presence of DLorJoint-TCIState or UL-TCIState, the receive beam for the uplink signal of the backhaul link of the network-side device may be a beam corresponding to the TCI configuration in DLorJoint-TCIState or UL-TCIState. In absence of DLorJoint-TCIState and UL-TCIState, the solutions described in the foregoing cases D-1 to D-3 may be used to determine the receive beam for the uplink signal of the backhaul link of the network-side device.

In addition, an effective time of the receive beam for the uplink signal of the backhaul link of the network-side device may be static or adaptive or semi-static.

For example, after being determined, the receive beam for the uplink signal of the backhaul link of the network-side device is always effective, until a new receive beam for the uplink signal of the backhaul link is configured, or a receive beam for a physical channel of the control link used as a reference changes; or

for example, after being determined, the receive beam for the uplink signal of the backhaul link of the network-side device is effective within a time period, and an effective duration is indicated by the protocol specification; or

for example, the receive beam for the uplink signal of the backhaul link of the network-side device is always the same as a receive beam for the uplink signal last used by the control link of the network-side device, that is, the receive beam for the uplink signal of the backhaul link of the network-side device continues to be effective until next uplink signal reception of the control link; or

for example, the protocol specification indicates that a QCL association exists between the backhaul link of the network-side device and the PUCCH of the control link, and when the receive beam for the PUCCH of the control link is updated, the receive beam for the uplink signal is also updated for the backhaul link of the network-side device accordingly, and the effective time of the receive beam for the uplink signal of the backhaul link is not earlier than an effective time of the receive beam for the PUCCH of the control link (for example, the receive beam for the uplink signal of the backhaul link takes effect immediately after the receive beam for the PUCCH of the control link takes effect); or

for example, the protocol specification indicates that a QCL association exists between the backhaul link of the network-side device and the PUSCH of the control link, and when the receive beam for the PUSCH of the control link is updated, the receive beam for the uplink signal is also updated for the backhaul link of the network-side device accordingly, and the effective time of the receive beam for the uplink signal of the backhaul link is not earlier than an effective time of the receive beam for the PUSCH of the control link (for example, the receive beam for the uplink signal of the backhaul link takes effect immediately after the receive beam for the PUSCH of the control link takes effect); or

for example, the protocol specification indicates that the receive beam for the uplink signal of the backhaul link of the network-side device is associated with the transmit beam for the downlink signal of the backhaul link, and when the transmit beam for the downlink signal of the backhaul link is updated, the receive beam for the uplink signal is also updated for the backhaul link accordingly, and the effective time of the receive beam for the uplink signal of the backhaul link is not earlier than the effective time of the transmit beam for the downlink signal of the backhaul link.

The method for determining a transmission configuration of a backhaul link according to the embodiments of this application may be performed by an apparatus for determining a transmission configuration of a backhaul link. An apparatus for determining a transmission configuration of a backhaul link according to the embodiments of this application is described by assuming that the method for determining a transmission configuration of a backhaul link is performed by the apparatus for determining a transmission configuration of a backhaul link in the embodiments of this application.

According to a third aspect, an embodiment of this application provides an apparatus for determining a transmission configuration of a backhaul link. As shown in FIG. 5, the apparatus 50 for determining a transmission configuration of a backhaul link includes:

a candidate beam set obtaining module 501, configured to obtain a configurable candidate beam set of a control link; and

a first configuration determining module 502, configured to determine a transmission configuration indicator TCI configuration for a downlink signal and/or a sending configuration for an uplink signal of the backhaul link based on the candidate beam set.

Optionally, the candidate beam set includes at least one of the following:

a beam corresponding to candidate TCI configuration information of the control link;
a beam corresponding to a downlink reference signal of the control link;
a beam corresponding to a downlink physical channel of the control link;
a beam corresponding to an uplink reference signal of the control link; and
a beam corresponding to an uplink physical channel of the control link.

Optionally, the first configuration determining module includes:

a first determining submodule, configured to determine the TCI configuration for the downlink signal of the backhaul link based on the candidate beam set and a protocol specification;
or
a first receiving submodule, configured to receive first configuration signaling sent by a network-side device; and
a second determining submodule, configured to determine the TCI configuration for the downlink signal of the backhaul link based on the candidate beam set and the first configuration signaling.

Optionally, in a case that the protocol specification or the first configuration signaling indicates that a QCL relationship exists between the downlink reference signal and/or the downlink physical channel of the control link and the backhaul link, the TCI configuration for the downlink signal of the backhaul link is determined based on the downlink reference signal and/or the downlink physical channel of the control link;
or

in a case that the first configuration signaling includes target identification information, the TCI configuration for the downlink signal of the backhaul link is the same as or partially the same as a TCI configuration indicated by the target identification information, where the target identification information indicates one TCI configuration in a candidate TCI configuration set of the control link;
or
in a case that the first configuration signaling includes a TCI configuration, the TCI configuration for the downlink signal of the backhaul link is the TCI configuration in the first configuration signaling.

Optionally, in a case that the protocol specification or the first configuration signaling indicates that a QCL relationship exists between the downlink reference signal of the control link and the backhaul link, a reference signal included in the TCI configuration for the downlink signal of the backhaul link is the downlink reference signal of the control link, and a QCL type is determined based on the protocol specification or a configuration of the network-side device;

or

in a case that the protocol specification or the first configuration signaling indicates that a QCL relationship exists between the downlink physical channel of the control link and the backhaul link, the TCI configuration for the downlink signal of the backhaul link is the same as or partially the same as a TCI configuration for the downlink physical channel of the control link.

Optionally, being partially the same means that reference signals included in the TCI configurations are the same, and a QCL type is indicated by the protocol specification or a configuration message.

Optionally, the TCI configuration indicated by the target identification information is one of M candidate TCI configurations indicated in higher-layer configuration information or one of N TCI configurations indicated in a TCI activation command of the control link, where both M and N are integers greater than 0; and

the N TCI configurations are part of the M TCI configurations.

Optionally, the TCI configuration for the downlink signal of the backhaul link is determined based on either the downlink reference signal or the downlink physical channel of the control link, whichever has a higher priority or is closer to a current time.

Optionally, in a case that the relay device determines the TCI configuration for the downlink signal of the backhaul link based on the candidate beam set and the first configuration signaling, the TCI configuration for the downlink signal of the backhaul link takes effect from a time indicated by k+X, where

k represents a slot or a last symbol in which the first configuration signaling is located, or a slot or a last symbol in which a hybrid automatic repeat request acknowledgement feedback message corresponding to the first configuration signaling is located, and X is determined by the protocol specification or determined based on a capability of the relay device.

Optionally, the apparatus further includes:
a first processing module, configured to perform one of the following in a case that transmission of the backhaul link overlaps transmission of the control link within a target time:

receiving the downlink signal of the backhaul link by using a target TCI configuration, or forwarding the uplink signal of the backhaul link by using a target uplink sending configuration; and

skipping forwarding the downlink signal or the uplink signal of the backhaul link within the target time, where

the target TCI configuration is one of TCI configurations used by the control link within the target time, and the target uplink sending configuration is an uplink sending configuration used by the control link within the target time; and

the target time includes at least one of a time unit of the transmission of the control link of the relay device, a time units before the transmission of the control link, and b time units after the transmission of the control link, where a and b represent integers greater than zero, and the time unit is one of an orthogonal frequency division multiplexing symbol, a slot, a subframe, and a radio frame.

Optionally, the apparatus further includes:

a first updating module, configured to: when a TCI configuration of the control link is updated, or when the relay device receives a new TCI configuration for the downlink signal of the backhaul link that is sent by a network-side device, or when the relay device receives sixth configuration signaling sent by a network-side device, update and activate the new TCI configuration for the downlink signal of the backhaul link, where

the sixth configuration signaling is used to instruct to update the TCI configuration for the downlink signal of the backhaul link.

Optionally, the apparatus further includes:
a second processing module, configured to perform one of the following after the first updating module updates and activates the new TCI configuration for the downlink signal of the backhaul link:

keeping an amplification factor of the downlink signal of the backhaul link unchanged;

adjusting the amplification factor of the downlink signal of the backhaul link based on a first amplification factor, where the first amplification factor is carried in third configuration signaling sent by the network-side device; and

adjusting the amplification factor of the downlink signal of the backhaul link based on a difference between a first channel measurement result and a second channel measurement result, where

the first channel measurement result and the second channel measurement result are respectively channel measurement results before and after the new TCI configuration for the downlink signal of the backhaul link is updated and activated.

Optionally, the sending configuration for the uplink signal of the backhaul link indicates that a transmit spatial domain filter for the uplink signal of the backhaul link is associated with one of the following:

a spatial receiver parameter for the downlink signal of the backhaul link;
a transmit spatial domain filter for an uplink signal of the control link; and
a receive spatial domain filter for a downlink signal of the control link.

Optionally, the first configuration determining module includes:

a third determining submodule, configured to determine the sending configuration for the uplink signal of the backhaul link based on the candidate beam set and a protocol specification;
or
a second receiving submodule, configured to receive fourth configuration signaling sent by a network-side device; and
a fourth determining submodule, configured to determine the sending configuration for the uplink signal of the backhaul link based on the candidate beam set and the fourth configuration signaling;
or
a fifth determining submodule, configured to determine the TCI configuration for the downlink signal of the backhaul link based on the candidate beam set; and
a sixth determining submodule, configured to determine the sending configuration for the uplink signal of the backhaul link based on the TCI configuration for the downlink signal of the backhaul link and a protocol specification.

Optionally, the protocol specification indicates that a transmit spatial domain filter for the uplink signal of the backhaul link is associated with a spatial receiver parameter for the downlink signal of the backhaul link;
or

the protocol specification or the fourth configuration signaling indicates that the sending configuration for the uplink signal of the backhaul link is determined based on a configuration of the uplink reference signal and/or the uplink physical channel of the control link;
or
the protocol specification or the fourth configuration signaling indicates that the sending configuration for the uplink signal of the backhaul link is determined based on the downlink reference signal and/or the downlink physical channel of the control link;
or
the fourth configuration signaling indicates that one of target candidate configurations is the sending configuration for the uplink signal of the backhaul link, where the target candidate configuration includes a configuration indicated by uplink signal configuration information configured in the control link.

Optionally, the apparatus further includes:
a third processing module, configured to perform one of the following after the uplink sending configuration of the backhaul link is updated:

keeping an amplification factor of the uplink signal of the backhaul link unchanged;
adjusting the amplification factor of the uplink signal of the backhaul link based on a second amplification factor, where the second amplification factor is carried in fifth configuration signaling sent by a network-side device; and
adjusting the amplification factor of the uplink signal of the backhaul link based on a difference between a third channel measurement result and a fourth channel measurement result, where

the third channel measurement result and the fourth channel measurement result are respectively channel measurement results before and after the sending configuration for the uplink signal of the backhaul link is updated.

The apparatus for determining a transmission configuration of a backhaul link in this embodiment of this application may be a relay device, for example, a relay device with an operating system, or may be a component in a relay device, for example, an integrated circuit or a chip.

The apparatus for determining a transmission configuration of a backhaul link according to this embodiment of this application can implement each process implemented in the method embodiment in FIG. 3, with the same technical effect achieved. To avoid repetition, details are not described herein again.

According to a fourth aspect, an embodiment of this application provides an apparatus for determining a transmission configuration of a backhaul link. As shown in FIG. 6, the apparatus 60 for determining a transmission configuration of a backhaul link includes:

a candidate beam set determining module 601, configured to determine a configurable candidate beam set of a control link;
a first sending module 602, configured to send beam configuration signaling of the backhaul link to a relay device, where the beam configuration signaling is used to instruct the relay device to determine a transmission configuration indicator TCI configuration for a downlink signal and/or a sending configuration for an uplink signal of the backhaul link based on the configurable candidate beam set of the control link; and

a second configuration determining module 603, configured to determine a transmit beam for the downlink signal and/or a receive beam for the uplink signal of the backhaul link based on the candidate beam set and based on the beam configuration signaling or a protocol specification.

Optionally, the candidate beam set includes at least one of the following:

a beam corresponding to candidate TCI configuration information of the control link;
a beam corresponding to a downlink reference signal of the control link;
a beam corresponding to a downlink physical channel of the control link;
a beam corresponding to an uplink reference signal of the control link; and
a beam corresponding to an uplink physical channel of the control link.

Optionally, in a case that the protocol specification or the beam configuration signaling indicates that a QCL relationship exists between the downlink reference signal and/or the downlink physical channel of the control link and the backhaul link, the transmit beam for the downlink signal of the backhaul link is determined based on the downlink reference signal and/or the downlink physical channel of the control link;
or

in a case that the beam configuration signaling includes target identification information, the transmit beam for the downlink signal of the backhaul link is the same as a beam corresponding to a TCI configuration indicated by the target identification information, where the target identification information indicates one TCI configuration in a candidate TCI configuration set of the control link;
or
in a case that the beam configuration signaling includes a TCI configuration, the transmit beam for the downlink signal of the backhaul link is a beam corresponding to the TCI configuration in the beam configuration signaling.

Optionally, in a case that the protocol specification or the beam configuration signaling indicates that a QCL relationship exists between the downlink reference signal of the control link and the backhaul link, the transmit beam for the downlink signal of the backhaul link is the same as a transmit beam for the downlink reference signal of the control link;
or
in a case that the protocol specification or the beam configuration signaling indicates that a QCL relationship exists between the downlink physical channel of the control link and the backhaul link, the transmit beam for the downlink signal of the backhaul link is the same as a transmit beam for the downlink physical channel of the control link.

Optionally, the TCI configuration indicated by the target identification information is one of M candidate TCI configurations indicated in higher-layer configuration information or one of N TCI configurations indicated in a TCI activation command of the control link, where both M and N are integers greater than 0; and
the N TCI configurations are part of the M TCI configurations.

Optionally, the transmit beam for the downlink signal of the backhaul link is determined based on a transmit beam for either the downlink reference signal or the downlink physical channel of the control link, whichever has a higher priority or is closer to a current time.

Optionally, the apparatus further includes:
a second sending module, configured to send sixth configuration signaling to the relay device, where the sixth configuration signaling is used to instruct to update the TCI configuration for the downlink signal of the backhaul link.

Optionally, the protocol specification indicates that the receive beam for the uplink signal of the backhaul link is the same as the transmit beam for the downlink signal of the backhaul link;
or

the protocol specification or the beam configuration signaling indicates that the receive beam for the uplink signal of the backhaul link is determined based on a receive beam for the uplink reference signal and/or the uplink physical channel of the control link;
or
the protocol specification or the beam configuration signaling indicates that the receive beam for the uplink signal of the backhaul link is determined based on a transmit beam for the downlink reference signal and/or the downlink physical channel of the control link;
or
the beam configuration signaling indicates that a beam corresponding to one of target candidate configurations is the receive beam for the uplink signal of the backhaul link, where the target candidate configuration includes a configuration indicated by uplink signal configuration information configured in the control link.

The apparatus for determining a transmission configuration of a backhaul link in this embodiment of this application may be an electronic device, for example, an electronic device with an operating system, or may be a component in an electronic device, for example, an integrated circuit or a chip. The electronic device may be a network-side device. For example, the network-side device may include but is not limited to the foregoing illustrated type of the network-side device 12. The other devices may be a server, a network attached storage (Network Attached Storage, NAS), and the like. This is not specifically limited in this embodiment of this application.

The apparatus for determining a transmission configuration of a backhaul link according to this embodiment of this application can implement each process implemented in the method embodiment in FIG. 4, with the same technical effect achieved. To avoid repetition, details are not described herein again.

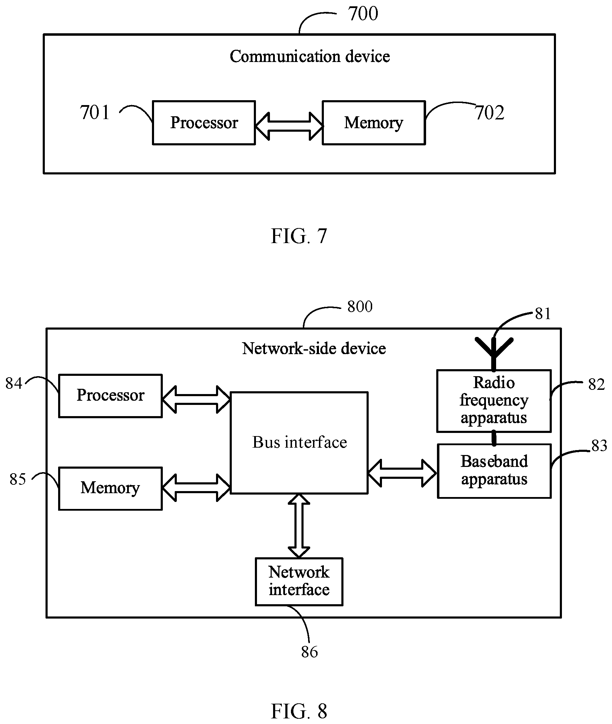

Optionally, as shown in FIG. 7, an embodiment of this application further provides a communication device 700, including a processor 701 and a memory 702. The memory 702 stores a program or instructions capable of running on the processor 701. For example, when the communication device 700 is a relay device, and the program or instructions are executed by the processor 701, the steps of the foregoing embodiment of the method for determining a transmission configuration of a backhaul link in the first aspect are implemented, with the same technical effect achieved. When the communication device 700 is a network-side device, and the program or instructions are executed by the processor 701, the steps of the foregoing embodiment of the method for determining a transmission configuration of a backhaul link in the second aspect are implemented, with the same technical effect achieved. To avoid repetition, details are not described herein again.

An embodiment of this application further provides a network-side device, including a processor and a communication interface. The communication interface is configured to send beam configuration signaling of a backhaul link to a relay device, where the beam configuration signaling is used to instruct the relay device to determine a transmission configuration indicator TCI configuration for a downlink signal and/or a sending configuration for an uplink signal of the backhaul link based on a configurable candidate beam set of a control link. The processor is configured to determine a transmit beam for the downlink signal of the backhaul link based on the beam configuration signaling.

The network-side device embodiment corresponds to the foregoing method embodiment of the network-side device, and each implementation process and implementation of the foregoing method embodiment can be applied to the network-side device embodiment, with the same technical effect achieved.

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method performed by the network-side device in the foregoing embodiment may be implemented in the baseband apparatus 83. The baseband apparatus 83 includes a baseband processor.

The baseband apparatus 83 may include, for example, at least one baseband unit. A plurality of chips are disposed on the baseband unit. As shown in FIG. 8, one of the chips is, for example, the baseband processor, connected to the memory 85 by using a bus interface, to invoke a program in the memory 85 to perform operations of the network-side device shown in the foregoing method embodiment.

The network-side device may further include a network interface 86, where the interface is, for example, a common public radio interface (common public radio interface, CPRI).

Specifically, the network-side device 800 in this embodiment of the present invention further includes a program or instructions stored in the memory 85 and capable of running on the processor 84. When the processor 84 invokes the program or instructions in the memory 85, the method performed by each module shown in FIG. 4 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the method for determining a transmission configuration of a backhaul link is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the method for determining a transmission configuration of a backhaul link, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the method for determining a transmission configuration of a backhaul link, with the same technical effect achieved. To avoid repetition, details are not described herein again.

An embodiment of this application further provides a system for determining a transmission configuration of a backhaul link. The system includes a relay device and a network-side device. The relay device may be configured to perform the steps of the method for determining a transmission configuration of a backhaul link in the first aspect. The network-side device may be configured to perform the steps of the method for determining a transmission configuration of a backhaul link in the second aspect.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A method for determining a transmission configuration of a backhaul link, wherein the method comprises:

   obtaining, by a relay device, a configurable candidate beam set of a control link; and
   determining, by the relay device, a transmission configuration indicator TCI configuration for a downlink signal and/or a sending configuration for an uplink signal of the backhaul link based on the candidate beam set.

2. The method according to claim 1, wherein the candidate beam set comprises at least one of the following:

   a beam corresponding to candidate TCI configuration information of the control link;
   a beam corresponding to a downlink reference signal of the control link;
   a beam corresponding to a downlink physical channel of the control link;
   a beam corresponding to an uplink reference signal of the control link; and
   a beam corresponding to an uplink physical channel of the control link.

3. The method according to claim 2, wherein the determining, by the relay device, a TCI configuration for a downlink signal of the backhaul link based on the candidate beam set comprises:

   determining, by the relay device, the TCI configuration for the downlink signal of the backhaul link based on the candidate beam set and a protocol specification;
   or
   receiving, by the relay device, first configuration signaling sent by a network-side device; and
   determining, by the relay device, the TCI configuration for the downlink signal of the backhaul link based on the candidate beam set and the first configuration signaling.

4. The method according to claim 3, wherein in a case that the protocol specification or the first configuration signaling indicates that a QCL relationship exists between the downlink reference signal and/or the downlink physical channel of the control link and the backhaul link, the TCI configuration for the downlink signal of the backhaul link is determined based on the downlink reference signal and/or the downlink physical channel of the control link; or

in a case that the first configuration signaling comprises target identification information, the TCI configuration for the downlink signal of the backhaul link is the same as or partially the same as a TCI configuration indicated by the target identification information, wherein the target identification information indicates one TCI configuration in a candidate TCI configuration set of the control link; or
in a case that the first configuration signaling comprises a TCI configuration, the TCI configuration for the downlink signal of the backhaul link is the TCI configuration in the first configuration signaling.

5. The method according to claim 4, wherein in a case that the protocol specification or the first configuration signaling indicates that a QCL relationship exists between the downlink reference signal of the control link and the backhaul link, a reference signal comprised in the TCI configuration for the downlink signal of the backhaul link is the downlink reference signal of the control link, and a QCL type is determined based on the protocol specification or a configuration of the network-side device; or
in a case that the protocol specification or the first configuration signaling indicates that a QCL relationship exists between the downlink physical channel of the control link and the backhaul link, the TCI configuration for the downlink signal of the backhaul link is the same as or partially the same as a TCI configuration for the downlink physical channel of the control link.

6. The method according to claim 5, wherein being partially the same means that reference signals comprised in the TCI configurations are the same, and a QCL type is indicated by the protocol specification or a configuration message.

7. The method according to claim 4, wherein the TCI configuration indicated by the target identification information is one of M candidate TCI configurations indicated in higher-layer configuration information or one of N TCI configurations indicated in a TCI activation command of the control link, wherein both M and N are integers greater than 0; and
the N TCI configurations are part of the M TCI configurations.

8. The method according to claim 3, wherein the TCI configuration for the downlink signal of the backhaul link is determined based on either the downlink reference signal or the downlink physical channel of the control link, whichever has a higher priority or is closer to a current time.

9. The method according to claim 3, wherein in a case that the relay device determines the TCI configuration for the downlink signal of the backhaul link based on the candidate beam set and the first configuration signaling, the TCI configuration for the downlink signal of the backhaul link takes effect from a time indicated by k+X, wherein
k represents a slot or a last symbol in which the first configuration signaling is located, or a slot or a last symbol in which a hybrid automatic repeat request acknowledgement feedback message corresponding to the first configuration signaling is located, and X is determined by the protocol specification or determined based on a capability of the relay device.

10. The method according to claim 1, wherein the method further comprises:
in a case that transmission of the backhaul link overlaps transmission of the control link within a target time, performing, by the relay device, one of the following:

receiving, by the relay device, the downlink signal of the backhaul link by using a target TCI configuration, or forwarding the uplink signal of the backhaul link by using a target uplink sending configuration; and
skipping forwarding, by the relay device, the downlink signal of the backhaul link within the target time, or skipping forwarding the uplink signal of the backhaul link within the target time, wherein
the target TCI configuration is one of TCI configurations used by the control link within the target time, and the target uplink sending configuration is an uplink sending configuration used by the control link within the target time; and
the target time comprises at least one of a time unit of the transmission of the control link, a time units before the transmission of the control link, and b time units after the transmission of the control link, wherein a and b represent integers greater than zero, and the time unit is one of an orthogonal frequency division multiplexing symbol, a slot, a subframe, and a radio frame.

**11.** The method according to claim 1, wherein the method further comprises:

when a TCI configuration of the control link is updated, or when the relay device receives a new TCI configuration for the downlink signal of the backhaul link that is sent by a network-side device, or when the relay device receives sixth configuration signaling sent by a network-side device, updating and activating, by the relay device, the new TCI configuration for the downlink signal of the backhaul link, wherein the sixth configuration signaling is used to instruct to update the TCI configuration for the downlink signal of the backhaul link.

**12.** The method according to claim 11, wherein after the updating and activating, by the relay device, the new TCI configuration for the downlink signal of the backhaul link, the method further comprises:
performing, by the relay device, one of the following:

keeping an amplification factor of the downlink signal of the backhaul link unchanged;
adjusting the amplification factor of the downlink signal of the backhaul link based on a first amplification factor, wherein the first amplification factor is carried in third configuration signaling sent by the network-side device; and
adjusting the amplification factor of the downlink signal of the backhaul link based on a difference between a first channel measurement result and a second channel measurement result, wherein the first channel measurement result and the second channel measurement result are respectively channel measurement results before and after the new TCI configuration for the downlink signal of the backhaul link is updated and activated.

**13.** The method according to claim 1, wherein the sending configuration for the uplink signal of the backhaul link indicates that a transmit spatial domain filter for the uplink signal of the backhaul link is associated with one of the following:

a spatial receiver parameter for the downlink signal of the backhaul link;
a transmit spatial domain filter for an uplink signal of the control link; and

a receive spatial domain filter for a downlink signal of the control link.

**14.** The method according to claim 2, wherein the determining, by the relay device, a sending configuration for an uplink signal of the backhaul link based on the candidate beam set comprises:

directly determining, by the relay device, the sending configuration for the uplink signal of the backhaul link based on the candidate beam set and a protocol specification;
or
receiving, by the relay device, fourth configuration signaling sent by a network-side device; and determining, by the relay device, the sending configuration for the uplink signal of the backhaul link based on the candidate beam set and the fourth configuration signaling;
or
determining, by the relay device, the TCI configuration for the downlink signal of the backhaul link based on the candidate beam set; and determining, by the relay device, the sending configuration for the uplink signal of the backhaul link based on the TCI configuration for the downlink signal of the backhaul link and a protocol specification.

**15.** The method according to claim 14, wherein

the protocol specification indicates that a transmit spatial domain filter for the uplink signal of the backhaul link is associated with a spatial receiver parameter for the downlink signal of the backhaul link;
or
the protocol specification or the fourth configuration signaling indicates that the sending configuration for the uplink signal of the backhaul link is determined based on a configuration of the uplink reference signal and/or the uplink physical channel of the control link;
or
the protocol specification or the fourth configuration signaling indicates that the sending configuration for the uplink signal of the backhaul link is determined based on the downlink reference signal and/or the downlink physical channel of the control link;
or
the fourth configuration signaling indicates that one of target candidate configurations is the sending configuration for the uplink signal of the backhaul link, wherein the target candidate configuration comprises a configuration indicated by uplink signal configuration information configured in the control link.

**16.** The method according to claim 1, wherein after the uplink sending configuration of the backhaul link is updated, the method further comprises:
performing, by the relay device, one of the following:

keeping an amplification factor of the uplink signal of the backhaul link unchanged;

adjusting the amplification factor of the uplink signal of the backhaul link based on a second amplification factor, wherein the second amplification factor is carried in fifth configuration signaling sent by a network-side device; and adjusting the amplification factor of the uplink signal of the backhaul link based on a difference between a third channel measurement result and a fourth channel measurement result, wherein

the third channel measurement result and the fourth channel measurement result are respectively channel measurement results before and after the sending configuration for the uplink signal of the backhaul link is updated.

17. A method for determining a transmission configuration of a backhaul link, wherein the method comprises:

determining, by a network-side device, a configurable candidate beam set of a control link; sending, by the network-side device, beam configuration signaling of the backhaul link to a relay device, wherein the beam configuration signaling is used to instruct the relay device to determine a transmission configuration indicator TCI configuration for a downlink signal and/or a sending configuration for an uplink signal of the backhaul link based on the configurable candidate beam set of the control link; and determining, by the network-side device, a transmit beam for the downlink signal and/or a receive beam for the uplink signal of the backhaul link based on the candidate beam set and based on the beam configuration signaling or a protocol specification.

18. The method according to claim 17, wherein the candidate beam set comprises at least one of the following:

a beam corresponding to candidate TCI configuration information of the control link; a beam corresponding to a downlink reference signal of the control link; a beam corresponding to a downlink physical channel of the control link; a beam corresponding to an uplink reference signal of the control link; and a beam corresponding to an uplink physical channel of the control link.

19. The method according to claim 18, wherein

in a case that the protocol specification or the beam configuration signaling indicates that a QCL relationship exists between the downlink reference signal and/or the downlink physical channel of the control link and the backhaul link, the transmit beam for the downlink signal of the backhaul link is determined based on the downlink reference signal and/or the downlink physical channel of the control link; or

in a case that the beam configuration signaling comprises target identification information, the transmit beam for the downlink signal of the backhaul link is the same as a beam corresponding to a TCI configuration indicated by the target identification information, wherein the target identification information indicates one TCI configuration in a candidate TCI configuration set of the control link; or

in a case that the beam configuration signaling comprises a TCI configuration, the transmit beam for the downlink signal of the backhaul link is a beam corresponding to the TCI configuration in the beam configuration signaling.

20. The method according to claim 19, wherein

in a case that the protocol specification or the beam configuration signaling indicates that a QCL relationship exists between the downlink reference signal of the control link and the backhaul link, the transmit beam for the downlink signal of the backhaul link is the same as a transmit beam for the downlink reference signal of the control link; or

in a case that the protocol specification or the beam configuration signaling indicates that a QCL relationship exists between the downlink physical channel of the control link and the backhaul link, the transmit beam for the downlink signal of the backhaul link is the same as a transmit beam for the downlink physical channel of the control link.

21. The method according to claim 19, wherein the TCI configuration indicated by the target identification information is one of M candidate TCI configurations indicated in higher-layer configuration information or one of N TCI configurations indicated in a TCI activation command of the control link, wherein both M and N are integers greater than 0; and the N TCI configurations are part of the M TCI configurations.

22. The method according to claim 18, wherein the transmit beam for the downlink signal of the backhaul link is determined based on a transmit beam for either the downlink reference signal or the downlink physical channel of the control link, whichever has a higher priority or is closer to a current time.

23. The method according to claim 17, wherein the method further comprises:
sending, by the network-side device, sixth configuration signaling to the relay device, wherein the sixth configuration signaling is used to instruct to update the TCI configuration for the downlink signal of the backhaul link.

24. The method according to claim 18, wherein

the protocol specification indicates that the receive beam for the uplink signal of the backhaul link is the same as the transmit beam for the downlink signal of the backhaul link;
or
the protocol specification or the beam configuration signaling indicates that the receive beam for the uplink signal of the backhaul link is determined based on a receive beam for the uplink reference signal and/or the uplink physical channel of the control link;
or
the protocol specification or the beam configuration signaling indicates that the receive beam for the uplink signal of the backhaul link is determined based on a transmit beam for the downlink reference signal and/or the downlink physical channel of the control link;
or
the beam configuration signaling indicates that a beam corresponding to one of target candidate configurations is the receive beam for the uplink signal of the backhaul link, wherein the target candidate configuration comprises a configuration indicated by uplink signal configuration information configured in the control link.

25. An apparatus for determining a transmission configuration of a backhaul link, wherein the apparatus comprises:

a candidate beam set obtaining module, configured to obtain a configurable candidate beam set of a control link; and
a first configuration determining module, configured to determine a transmission configuration indicator TCI configuration for a downlink signal and/or a sending configuration for an uplink signal of the backhaul link based on the candidate beam set.

26. An apparatus for determining a transmission configuration of a backhaul link, wherein the apparatus comprises:

a candidate beam set determining module, configured to determine a configurable candidate beam set of a control link;
a first sending module, configured to send beam configuration signaling of the backhaul link to a relay device, wherein the beam configuration signaling is used to instruct the relay device to determine a transmission configuration indicator TCI configuration for a downlink signal and/or a sending configuration for an uplink signal of the backhaul link based on the configurable candidate beam set of the control link; and
a second configuration determining module, configured to determine a transmit beam for the downlink signal and/or a receive beam for the uplink signal of the backhaul link based on the candidate beam set and based on the beam configuration signaling or a protocol specification.

27. A relay device, comprising a processor and a memory, wherein the memory stores a program or instructions capable of running on the processor, and when the program or instructions are executed by the processor, the steps of the method for determining a transmission configuration of a backhaul link according to any one of claims 1 to 16 are implemented.

28. A network-side device, comprising a processor and a memory, wherein the memory stores a program or instructions capable of running on the processor, and when the program or instructions are executed by the processor, the steps of the method for determining a transmission configuration of a backhaul link according to any one of claims 17 to 24 are implemented.

29. A readable storage medium, wherein the readable storage medium stores a program or instructions, and when the program or instructions are executed by a processor, the steps of the method for determining a transmission configuration of a backhaul link according to any one of claims 1 to 16 are implemented, or the steps of the method for determining a transmission configuration of a backhaul link according to any one of claims 17 to 24 are implemented.

FIG. 1

FIG. 2

| A relay device obtains a configurable candidate beam set of a control link | 301 |

| The relay device determines a transmission configuration indicator TCI configuration for a downlink signal and/or a sending configuration for an uplink signal of a backhaul link based on the candidate beam set | 302 |

FIG. 3

A network-side device determines a configurable candidate beam set of a control link  〜401

↓

The network-side device sends beam configuration signaling of a backhaul link to a relay device  〜402

↓

The network-side device determines a transmit beam for the downlink signal and/or a receive beam for the uplink signal of the backhaul link based on the candidate beam set and based on the beam configuration signaling or a protocol specification  〜403

FIG. 4

Apparatus for determining a transmission configuration of a backhaul link  50

Candidate beam set obtaining module  501

First configuration determining module  502

FIG. 5

Apparatus for determining a transmission configuration of a backhaul link  60

Candidate beam set determining module  601

First sending module  602

Second configuration determining module  603

FIG. 6

FIG. 7

FIG. 8

## INTERNATIONAL SEARCH REPORT

| International application No. |
| --- |
| **PCT/CN2023/108808** |

| A. | CLASSIFICATION OF SUBJECT MATTER |
| --- | --- |

H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 中继, 中转, 波束, 集合, 子集, 配置, 指示, 回传, 返回, 链路, 传输配置指示, 上行, 下行, 候选, relay, beam, set, subset, configuration, indication, backhaul, return, link, uplink, downlink, candidate, TCI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110933749 A (CHENGDU HUAWEI TECHNOLOGIES CO., LTD.) 27 March 2020 (2020-03-27) <br> description, paragraphs [0067]-[0240] | 1-29 |
| A | CN 114600380 A (QUALCOMM INC.) 07 June 2022 (2022-06-07) <br> entire document | 1-29 |
| A | CN 113615103 A (QUALCOMM INC.) 05 November 2021 (2021-11-05) <br> entire document | 1-29 |
| A | CN 114270910 A (BEIJING XIAOMI MOBILE SOFTWARE CO., LTD.) 01 April 2022 (2022-04-01) <br> entire document | 1-29 |
| A | CN 114467351 A (QUALCOMM INC.) 10 May 2022 (2022-05-10) <br> entire document | 1-29 |
| A | CN 114788187 A (QUALCOMM INC.) 22 July 2022 (2022-07-22) <br> entire document | 1-29 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 October 2023** | **05 November 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/108808**

| Patent document cited in search report | | | Publication date (day/month/year) | Patent family member(s) | | | Publication date (day/month/year) |
|---|---|---|---|---|---|---|---|
| CN | 110933749 | A | 27 March 2020 | EP | 3843477 | A1 | 30 June 2021 |
| | | | | EP | 3843477 | A4 | 27 October 2021 |
| | | | | US | 2021211893 | A1 | 08 July 2021 |
| | | | | WO | 2020057459 | A1 | 26 March 2020 |
| CN | 114600380 | A | 07 June 2022 | WO | 2021086477 | A1 | 06 May 2021 |
| | | | | US | 2021126694 | A1 | 29 April 2021 |
| | | | | US | 11700045 | B2 | 11 July 2023 |
| | | | | EP | 4052378 | A1 | 07 September 2022 |
| CN | 113615103 | A | 05 November 2021 | US | 2020314857 | A1 | 01 October 2020 |
| | | | | US | 11304201 | B2 | 12 April 2022 |
| | | | | WO | 2020205668 | A1 | 08 October 2020 |
| | | | | EP | 3949158 | A1 | 09 February 2022 |
| CN | 114270910 | A | 01 April 2022 | None | | | |
| CN | 114467351 | A | 10 May 2022 | EP | 4038746 | A1 | 10 August 2022 |
| | | | | WO | 2021067982 | A1 | 08 April 2021 |
| | | | | US | 2021105778 | A1 | 08 April 2021 |
| | | | | US | 11516814 | B2 | 29 November 2022 |
| CN | 114788187 | A | 22 July 2022 | WO | 2021119648 | A1 | 17 June 2021 |
| | | | | EP | 4073945 | A1 | 19 October 2022 |
| | | | | US | 2021184809 | A1 | 17 June 2021 |

Form PCT/ISA/210 (patent family annex) (July 2022)

**EP 4 564 721 A1**

**Patent documents cited in the description**

- CN 202210879050